(19) Europäisches Patentamt

European Patent Office

Office européen des brevets

(11) **EP 1 291 633 B1**

(12) **EUROPEAN PATENT SPECIFICATION**

(45) Date of publication and mention
of the grant of the patent:
**28.09.2005   Bulletin 2005/39**

(51) Int Cl.7: **G01M 11/02**, G02C 7/02

(21) Application number: **02016921.5**

(22) Date of filing: **31.07.2002**

(54) **Method for evaluating binocular performance of spectacle lenses, method for displaying said performance and apparatus therefore**

Verfahren zur Beurteilung der binokularen Eigenschaften von Brillengläsern, Vorrichtung zur Anzeige dieser Eigenschaften und zugehöriger Apparat

Procédé d'évaluation de la performance binoculaire de verres de lunettes, dispositif d'affichage de cette performance et appareil associé

(84) Designated Contracting States:
**AT BE BG CH CY CZ DE DK EE ES FI FR GB GR IE IT LI LU MC NL PT SE SK TR**

(30) Priority: **06.09.2001  JP 2001270267**

(43) Date of publication of application:
**12.03.2003   Bulletin 2003/11**

(73) Proprietor: **HOYA CORPORATION
Tokyo 161-8525 (JP)**

(72) Inventor: **Qi, Hua
Tokyo 161-8525 (JP)**

(74) Representative: **Kuhnen & Wacker
Patent- und Rechtsanwaltsbüro
Prinz-Ludwig-Strasse 40A
85354 Freising (DE)**

(56) References cited:
**EP-A- 0 950 887          EP-A- 1 018 691
EP-A- 1 146 328          EP-A- 1 158 338**

**Description**

Field of the Invention

The present invention relates to a method and apparatus for indicating binocular performance of spectacle lenses in a directly appreciable way.

Background of the Invention

As methods for displaying the performance of a spectacle lens, there have been known methods for deriving the average refractive power and the astigmatism of the surface of the lens and indicating the distribution by contour lines on the surface of the lens.

However, in general, the average refractive power and the astigmatism of the surface of the lens normally indicates only the properties of curvature of the surface of the lens and there is no possibility to directly indicate the performance of the lens in observing the outside world through the lens. The inventor has proposed an ocular optical system simulating method for simulating how things can be seen in observing the outside 3-dimentional world through a spectacle lens as a method in which the performance of the lens in observing the outside world through the lens by the visual acuity of a person wearing the spectacle is taken into consideration. This method is a method of creating and using, not an optical image projected to the retinal surface of the eyes, but a rotation-based retinal image, defined as an image obtained by turning the eye-ball with respect to all object points within a visual field and by connecting images caught at the fovea. The rotational-based retinal image approximates an image perceived by the eyes through the spectacle lens.

The rotation-based retinal image and its motion video image can represent fluctuation, distortion and blur, which can be perceived in viewing the outside world through the spectacle lens. This method is described, for example, in EP 1 018 691. However, the rotation-based retinal image is a result in which the lens imaging performance is reflected on the image in viewing each physical point within the image and does not directly indicate the imaging performance itself. For instance, the rotation-based retinal image indicates the same result even if the point spread function ("PSF") is different at a part of the image where changes in brightness are small. The rotation-based retinal image is unable to perfectly reflect a PSF whose extension is small in case of an original image having a smaller number of pixels.

In order to solve the above described problem, the inventor proposed a method for indicating spectacle lens performance in observing outside world through the lens and displaying performance indexes in a direct appreciable way. The performance indexes include not only a clearness index but also an average power error, residual astigmatism, deformation index, etc.

However, both rotation-based retinal image (RRI) and performance index image are based on monocular vision. It is not sufficient to evaluate the visual performance only by using monocular properties because mankind usually sees with both eyes.

The inventor proposed a method for simulating what the observer sees binocularly through two spectacle lenses each placed in front of right and left eyes. The image is named a binocular synkinetic rotation-based retinal image.

Just like the monocular rotation-based retinal image, the binocular synkinetic rotation-based retinal image also has the problem that it is difficult to indicate the visual performance itself.

It is an object of the present invention to providing a method for evaluating the binocular performance of spectacle lenses. The invention is more than just a simple analogy from monocular vision to binocular vision. There are many factors that only affect visual performance when the observer sees with his both eyes.

The present invention provides a method for indicating binocular performance of spectacle lenses according to claim 1.

The present invention also relates to an apparatus for realizing the inventive method, according to claim 17.

The documents EP 1 158 338 and EP 1 146 328 are state of the art according to Art. 54(3) EPC.

Detailed Description of the Preferred Embodiments

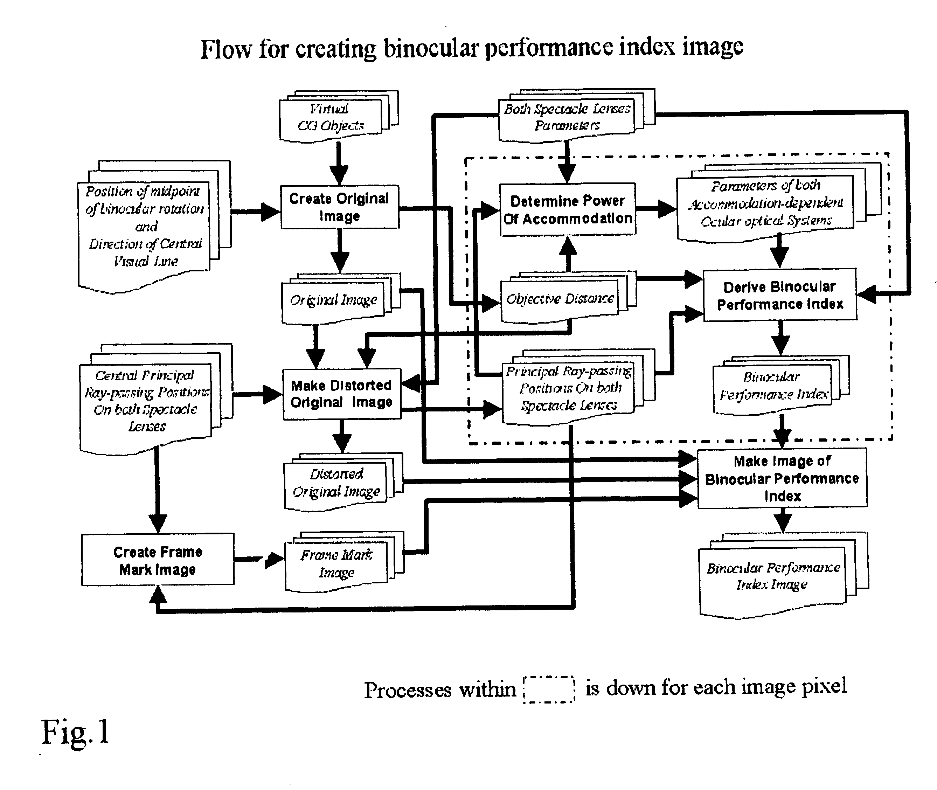

Fig. 1      is a diagram showing a flow of creating a binocular performance index image of spectacle lenses of Embodiment 1 of the present invention;

Fig. 2      is a diagram showing the coordinates of naked eye visual field;

Fig. 3      is a diagram describing the definition of the direction of binocular synkinetic rotation;

Fig. 4      is a diagram showing the coordinates of the visual field observed through spectacle lenses;

Fig. 5     is a diagram describing the definition of the binocular convergence angle and the vertical oblique angle (the vertical deviation in right and left visual lines);

Fig. 6     is a diagram describing the definition of the binocular distortion index (the point distortion index);

Fig. 7     is a diagram exhibiting optical parameters (un-accommodated) of the eye of the Navarro model;

Fig. 8     shows equations describing dependency of the optical parameters of the eye of the Navarro model on the power of accommodation;

Fig. 9     is a diagram describing PSF;

Fig. 10     is a diagram showing the ocular optical system of spectacle glasses when objects are seen by an observer;

Fig. 11     is a diagram showing division of an entrance pupil;

Fig. 12     is a diagram showing uniting of the binocular PSF;

Fig. 13     is an original image of the first embodiment;

Fig. 14     is a map of the positions on the convex surface of a lens where the visual lines pass in the first embodiment.

Fig. 15     shows the image of residual power of the average of the right and the left residual wavefront in the first embodiment;

Fig. 16     shows the image of the convergence-accommodation difference in the first embodiment;

Fig. 17     shows the image of the binocular vertical deviation in the first embodiment;

Fig. 18     shows the image of the binocular point deformation index in the first embodiment;

Fig. 19     shows the image of the binocular clearness index in the first embodiment;

Fig. 20     is a diagram showing the overall flow of the method for creating a video image of the binocular performance index image; and

Fig. 21     is a block diagram showing the construction of the apparatus for deriving and displaying the binocular performance of spectacle lenses of the present invention.

The method for indicating binocular performance of spectacle lenses of the first embodiment of the present invention will be described as follows with reference to the above Figures.

The method for indicating binocular performance of spectacle lenses of the present embodiment comprises creating and displaying a still image of the binocular performance index of spectacle lenses when an observer views three-dimensional CG objects within a visual field through the spectacle lenses placed in front of his eyes. Here the image is named a binocular performance index image. The binocular performance index image is such a digital image of the visual field that, for each pixel in the image, the monochromatic luminosity or the RGB color luminosities does not or do not indicate the real color or brightness of the object point, but indicate a value of binocular performance index for viewing that object point binocularly through the right and left spectacle lenses.

Binocular performance index is an abstract concept. It can be concreted to several types of quantities or values. Some of them are the analogy from monocular vision like the binocular residual corrective error of right and left spectacle lenses, the binocular clearness index, the binocular point deformation index, etc. The others are distinctive ones like binocular vertical deviation angle, deviation between convergence and accommodation, aniseikonic index, etc.

The images of the visual field also have several types. It may be the original image, an image observed with naked eyes so that it does not include any distortion. It also can be considered as the image in the object space of an optical system. The image of the visual field may also be the distorted original image, an image that includes distortions caused by the lenses. Also, it can be considered as the image in the image space of an optical system. There are also special types of images of the visual field. For example an image whose horizontal and vertical coordinates represent the position on the surface of the spectacle lens (right or left) through where the observer sees the corresponding object point in the visual field. This image may help to fix directly the position where the performance has a problem.

The method of this embodiment comprises (1) a step of creating an original image, (2) a step of creating a distorted original image, (3) a step of deriving positions of spectacle frames, (4) a step of obtaining a binocular performance index and (5) a step of creating a binocular performance index image.

(1) Creating an original image

This step comprises creating virtual objects by using computer graphics and placing the objects in a virtual three-dimensional space; placing a midpoint of binocular rotation at a specific position in the virtual three-dimensional space; creating, as the original image, an image of the virtual objects within a visual field defined as a specific range of a pyramid whose apex is located at the midpoint of binocular rotation and whose central axis extends along a direction of a specific central visual line; and obtaining, with respect to each of a plurality of object points, each object point corresponding to a pixel of the original image, an object distance defined as a distance between the object point and the midpoint of binocular rotation. This step will be described in more detail as follows.

a. Creating virtual objects for the original image

In accordance with a well-known method of computer graphics, virtual objects are created and placed in a virtual three-dimensional space. For example, a disk, a chair and other furniture may be placed in a virtual room; or, as a further example, a flowerbed, trees and traffic signs may be placed in a virtual outdoor field.

b. Creating an original image

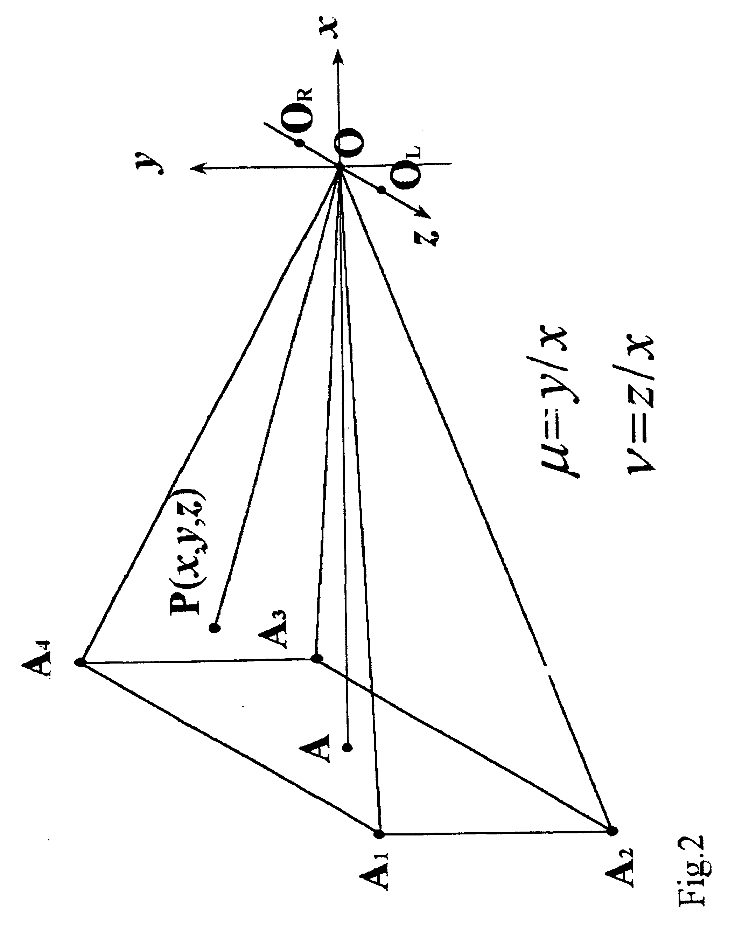

The midpoint of binocular rotation, defined as the midpoint of both centers of monocular rotation, is placed at a specific position in the virtual three-dimensional space. Thereafter, an original image is created as an image of the virtual objects created above within a visual field. The visual field is defined as a specific range defined by a pyramid whose apex is located at the midpoint of binocular rotation and whose central axis extends along a direction of a specific central visual line. More specifically, as shown in Fig. 2, a visual field is defined as a pyramid $A_1A_2A_3A_4$ whose apex is located at O, which is the midpoint of centers of right monocular rotation OR and left monocular rotation $O_L$ and whose central axis extends along the direction of the central visual line OA which is perpendicular to the line $O_RO_L$. An image is created within this visual field and defined to be the original image. In the pyramidal visual field, the position of an arbitrary point P(x, y, z) on the original image is expressed by coordinates $\mu$ = y/x and $\nu$ = z/x, wherein (x, y, z) are the coordinates of the point within a Cartesian coordinate system whose point of origin is located at O and whose x-axis extends along the line AO. When each object point in the visual field is projected in this manner, any straight line in the space is always projected as a straight line on the image. Therefore, the projection is of no distortion. An image created by projecting every object point in accordance with this projection is used as the original image.

c. Deriving object distance to an object point

In the step of creating an original image, the distance between the object point P(x, y, z) and the midpoint of binocular rotation O, i.e., the object distance, is also obtained from the values of its coordinates.

(2) Creating a distorted original image

In this step, an image, having distortion caused by the spectacle lenses when the original visual field is observed through spectacle lenses, is created, and positions are noted on each spectacle lenses through which each of the object points is observed. The position of an object point observed by both eyes is expressed by the direction of synkinetic binocular rotation. So the definition of the direction of synkinetic binocular rotation is the key for determining the spatial perception of binocular vision. In accordance with the study by the present inventor, the definition of the direction of synkinetic binocular rotation should satisfy the following principles:

1. A single unique direction of synkinetic binocular rotation is determined by the directions of right and left monocular rotation;
2. The direction of synkinetic binocular rotation continuously changes with changes in the direction of right and left monocular rotation; and
3. Perception of space based on the direction of synkinetic binocular rotation approximates the perception of space based on the direction of both right and left monocular rotation.

One method of defining the direction of synkinetic binocular rotation is the method using the Hering's law. In 1868, Hering proposed Hering's law, which states that, the right eye and the left eye always rotate by the same amount, either in the same direction or in opposite directions. The rotation of both eyes for seeing an arbitrary point in space can be decomposed into two terms, i.e., the version and the vergence.

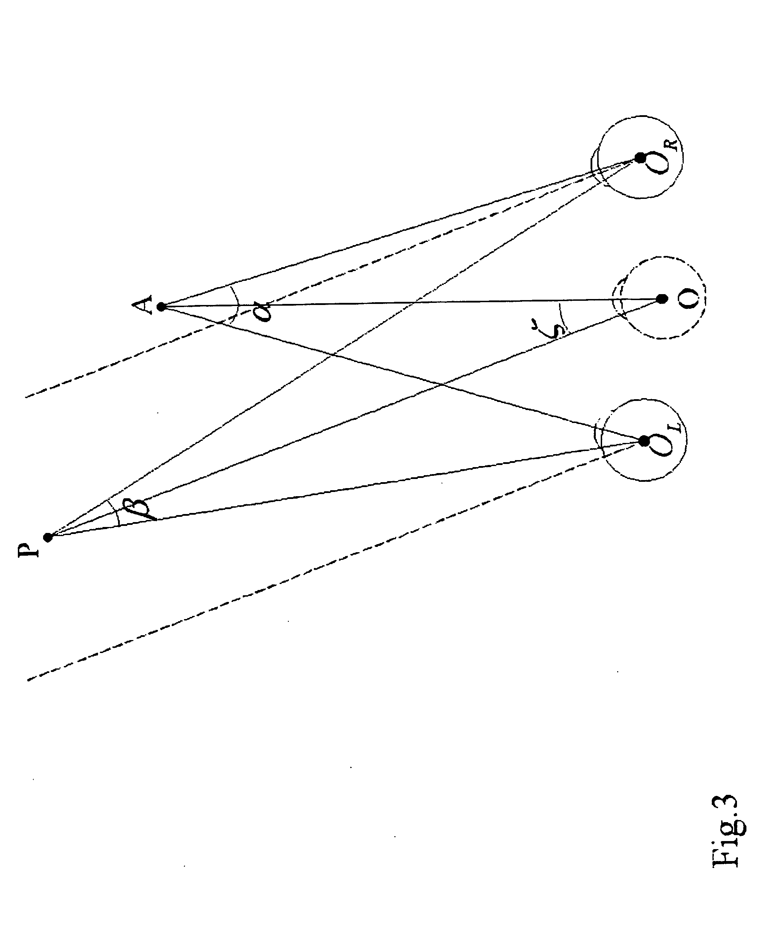

As shown in Fig. 3, rotation of each of right and left eyes to see a point P can be decomposed into the version, the rotation of the eyes in the same direction by the same amount $\xi$, and the vergence, the rotation of the eyes in opposite directions by the same angle of $\beta$/2, in a visual plane containing both centers of monocular rotation and the point P. The direction of the version is defined as the direction of synkinetic binocular rotation, i.e., the direction along the line which equally divides the angle between the directions of right and left monocular rotations. When the unit vectors in the directions of right and left monocular rotations are expressed by $\bar{r}_R$ and $\bar{r}_L$, the unit vector in the direction of synkinetic binocular rotation may be expressed as $\bar{r} = \frac{\bar{r}_R + \bar{r}_L}{|\bar{r}_R + \bar{r}_L|}$. The angle $\beta$ is the angle of convergence.

In the Hering's law, the right eye and the left eye are assumed to be completely equal. However, in actuality, a phenomenon of a dominant eye, wherein one eye plays a dominant role compared with the other eye, is observable, although the degree may be different. Therefore, a coefficient k is introduced in the present invention and the unit vector in the direction of synkinetic binocular rotation is defined as:

[Formula 3]

$$\bar{r} = \frac{k\bar{r}_R + (1-k)\bar{r}_L}{|k\bar{r}_R + (1-k)\bar{r}_L|}$$

wherein $0 \le k \le 1$.

There is a problem if the bisector of the angle between the right and left visual line is defined as the direction of synkinetic binocular rotation. For all object points, there extents of the direction of synkinetic binocular rotation do not converge on a single point. The problem causes the necessity of a new definition of deformation because the shape of the object has already been changed even in the case of the naked eyes.

To avoid this problem, the inventor has provided a new definition of the synkinetic binocular rotation. The direction of the synkinetic binocular rotation is defined as the direction from the point of convergence fixation (P), at the right and left visual line which converges towards the midpoint (O) of the right and left ocular rotation center. In the case of naked eyes, the point of convergence fixation is exactly the object point.

In a case that the object point is viewed through spectacle lenses, the effect of refraction of the lenses must be considered in determining the direction of synkinetic binocular rotation. The direction of rotation of both right and right eyes do not necessarily orientate towards the object point, they orientate along each monocular principal ray after leaving each rear surface of spectacle lens, i.e. the direction of each monocular rotation. Here the monocular principal ray is defined as the ray emitted from the object point and passing through the spectacle lens toward a center of monocular rotation. Therefore the direction of synkinetic binocular rotation can be derived from the directions of both right and left monocular rotation as in the case of naked eyes.

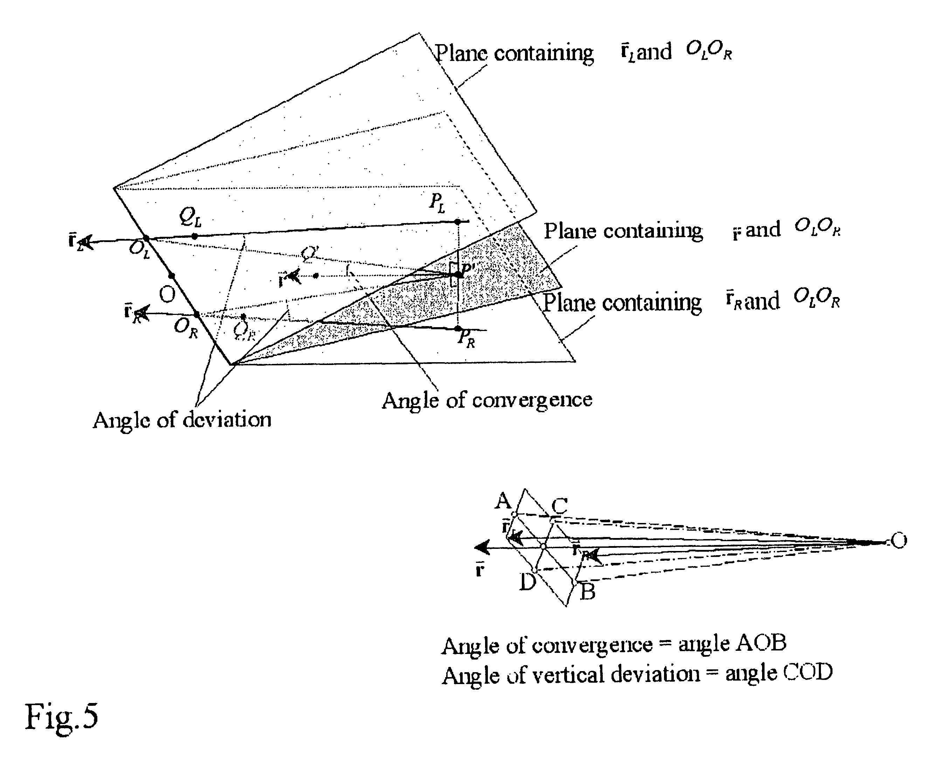

However, the right visual line, drawn from the right rotation center OR and orientated towards the directions of right monocular rotation, and the left one do not always converge at a point when the object is seen through spectacle lenses. As shown in Fig. 5, the right visual line plane, which contains the direction of right monocular rotation $\bar{\mathbf{r}}_R$ and $O_R O_L$, and the left visual line plane, which contains the direction of right monocular rotation $\bar{\mathbf{r}}_L$ and $O_R O_L$, are not overlappeing each other. The point of convergence fixation (P') should be redefined in this case.

In the present invention, a binocular visual plane is defined as the plane containing the direction $\bar{r} = \frac{\bar{r}_R + \bar{r}_L}{|\bar{r}_R + \bar{r}_L|}$, the bisector of the angle between $\bar{r}R$ and $\bar{r}L$, and $O_R O_L$. Both projections of $\bar{r}_R$ and $\bar{r}_L$ on the binocular visual plane must have a point P' at which they intersect with each other. The point P' is then defined as the point of convergence fixation. The direction of synkinetic binocular rotation can be defined as the direction $\bar{r} = \frac{\bar{r}_R + \bar{r}_L}{|\bar{r}_R + \bar{r}_L|}$, the bisector of the angle between $\bar{r}_R$ and $\bar{r}_L$, or the direction from P' to the midpoint O.

Now the position of an object point in the original visual field and in the visual field viewed through the spectacle lenses, or the after-lens visual field, have been defined. A distorted original image is such an image in which each pixel in the original image has been replaced to a new position determined by the change of the position of the corresponding object point from in the original visual field to in the after-lens visual field.

The object point at the center of the visual field should not change its position from in the original visual field into the after-lens visual field. The responding direction rotations and principal rays, the monocular one and the binocular one, the right one and the left one, for viewing this point are called with an adjective "central", ex. direction of central synkinetic binocular rotation direction, or right central principal ray etc. In the original visual field, as well as in the after-lens visual field, the direction of central synkinetic binocular rotation direction is assigned to be each x-axis of the Cartesian coordinate system. Both Cartesian coordinate systems place its origin at the midpoint O.

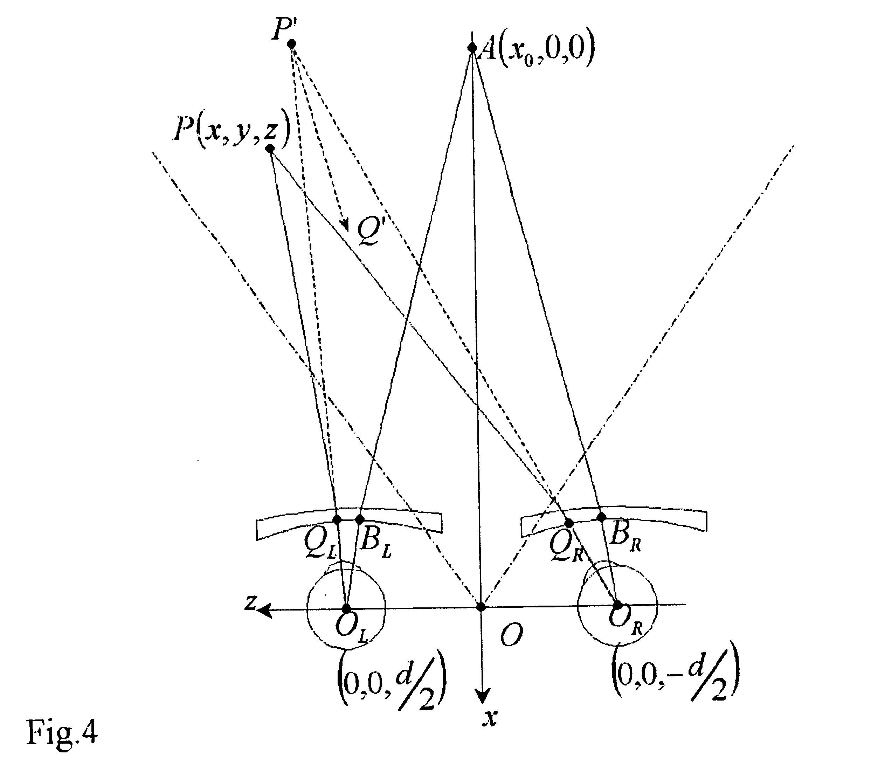

The central direction of synkinetic binocular rotation can be determined in accordance with the ray tracing method so that the right and left central principal rays pass the right and left spectacle lenses, respectively, at predetermined positions. As shown in Fig. 4, when spectacle lenses are placed between the central object point A $(x_0, 0, 0)$ in the visual field and the right and left centers of monocular rotation $O_R(0, 0, -d/2)$ and $O_L(0, 0, d/2)$, respectively, it is necessary, in order to see the central object A, that the right eyeball be rotated not in the direction of $O_R A$ but in the direction $O_R B_R$, i.e., toward the position of the right ray on the right spectacle lens. Furthermore, it is necessary that the left eyeball be rotated not in the direction of $O_L A$ but in the direction $O_L B_L$, i.e., toward the position of the left ray on the left lens. The rays $AB_R O_R$ and $AB_L O_L$ are the right and left central monocular principal rays, respectively. The vectors $B_R O_R$ and $B_L O_L$ show the right and left central directions of monocular rotation, respectively. Their unit vectors $\bar{r}_R$ and $\bar{r}_L$ are used to derive the direction of central synkinetic binocular rotation, i.e. the x' axis in the after-lens visual field.

The positions of the right and left central monocular principal rays on the respective spectacle lenses, i.e., the principal ray-passing positions $B_R$ and $B_L$ are not independently set but are affected by the distance $d$ between the centers of monocular rotation and the distance to the object point.

The position of the other object point in the after-lens visual field can be derived as the direction of synkinetic binocular rotation for viewing the object point. As shown in Fig. 4, for an arbitrary point P(x, y, z) the right and left

principal ray $PQ_RO_R$ and $PQ_LO_L$ are traced and the point of convergence fixation P'(x',y',z') is derived. P'(x',y',z') is the position in the after-lens visual field. In the distorted original image it is replaced at a position of ($\mu$'=y'/x', $\nu$'=z'/x') from its position in the original image at ($\mu$ = y/x, $\nu$ = z/x). Meanwhile the positions of the right and left principal rays on each spectacle lens ($Q_R$ and $Q_L$) are also derived.

Although the ray tracing calculation must be carried out with respect to all object points within the visual field to find their directions of synkinetic binocular rotation and principal ray-passing positions on both spectacle lenses, it is possible to obtain these data with less calculation while controlling the calculation errors within a certain range by using a mathematical method called spline interpolation.

(3) Deriving the positions of spectacle frames

In this step, the positions of edges and hidden marks of right and left spectacle frames on the original image or the distorted original image are obtained and images of the spectacle frame marks are created using the data of principal ray-passing positions on each spectacle lens obtained in the step of creating a distorted original image. By comparing the image of spectacle frame marks with the distorted original image, the positions on the right and left spectacle lenses through which each of the object points in the image are observed can be precisely found out.

(4) Deriving the binocular performance index

In this step, a binocular performance index is derived for each pixel of the original image or the distorted original image. The binocular performance index may be a binocular residual corrective error, a binocular clearness index, a binocular point deformation index, a binocular vertical deviation angle, a deviation between convergence and accommodation, an aniseikonic index, etc. All these binocular performance indexes are derived in the condition that both right and left principal rays from the corresponding object point are traced and both eyes are rotated towards each direction of monocular rotation. In some cases like binocular clearness index an accommodation-dependent ocular optical system must be introduced to each right and left eye. The power of accommodation of both eyes can be set individually depending on the insufficiency of the refractive power of each right and left lens, or to an identical value according to the theory of ophthalmic optics, or to other values.

a. Deriving the binocular residual corrective error

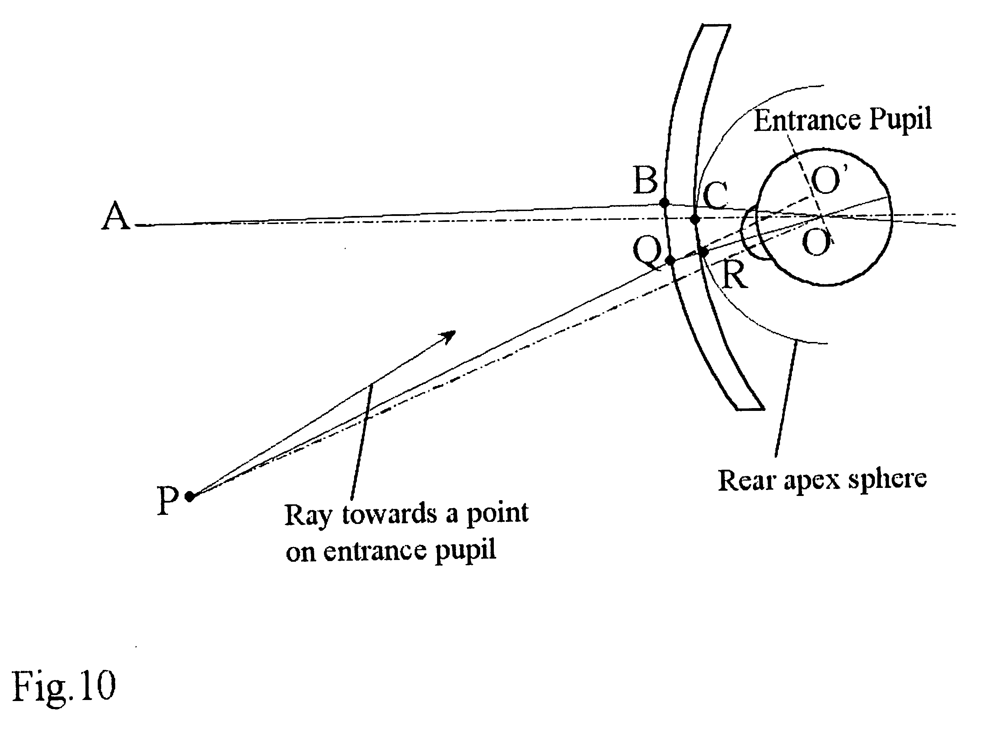

As shown in Fig. 10, the ray emitted from an arbitrary object point P is refracted at point Q of the lens first plane and heads toward the center of rotation O. The lens refractive effect in seeing the point P may be represented by the shape of a wave front, which originates from the point P as a spherical wave or a plane wave (when P is located at infinity) and propagated along the principal ray, at point R, the intersection of the ray and a rear apex sphere (a sphere centered on the center of rotation O and passing through the lens rear apex C). The shape of the wave front near the point R may be expressed by the following expression in general in a local coordinate system whose origin is point R and whose x-axis is the RO direction:

$$x_D = \frac{1}{2} D_{yy}y^2 + D_{yz}yz + \frac{1}{2}D_{yy}z^2$$

$D_{yy}$, $D_{yz}$ and $D_{zz}$ can be derived by ray tracing.

Meanwhile, the refractive state of an eye with astigmatism can also be expressed by the shape of corrective wave front at the point R. When the far corrective wave front including astigmatic power and direction is expressed by the following expression:

$$x_C = \frac{1}{2} C_{yy}y^2 + C_{yz}yz + \frac{1}{2} C_{zz}z^2$$

$C_{yy}$, $C_{yz}$ and $C_{zz}$ can be derived from the prescription.

The amount of accommodation can also be expressed as a wavefront at the point R:

$$x_A = \frac{1}{2} A(y^2+z^2)$$

here A is the ammount of the accommodation power and it is assumed that no extra astigmatism occurs during the eye performs accommodation.

The residual wavefront is now defined as

$$x = x_C - x_A - x_D$$

$$= \frac{1}{2}(C_{yy} - A - D_{yy})y^2 + (C_{yz} - D_{yz})yz + \frac{1}{2}(C_{zz} - A - D_{zz})z^2$$

$$= \frac{1}{2}S_{yy}y^2 + S_{yz}yz + \frac{1}{2}S_{zz}z^2$$

The residual power and the residual astigmatism is then derived from the above formula as:

$$S_{ave} = \frac{1}{2}(S_{yy} + S_{zz})$$

and

$$S_{as} = 2\left\{\frac{1}{4}(S_{yy} - S_{zz})^2 + S_{yz}^2\right\}^{1/2}.$$

The residual power and the residual astigmatism can be used to evaluate the binocular residual corrective error. Ideally both of them is zero. For correcting the residual power, i.e. $S_{ave} = 0$, the accommodation power should be $A = \frac{1}{2}C_{yy} + C_{zz}) - \frac{1}{2}(D_{yy} + D_{zz}) = C_{ave} - D_{ave}$. However the value of A must be assigned a value within a range from 0 to a maximum $A_{max}$. So A should be expressed as:

$$A = \begin{cases} 0 & C_{ave} - D_{ave} < 0 \\ C_{ave} - D_{ave} & 0 < C_{ave} - D_{ave} < A_{max} \\ A_{max} & C_{ave} - D_{ave} > A_{max} \end{cases}.$$

In the case of binocular vision, the power of accommodation of both eyes can be assigned individually each value $A_R$ and $A_L$ determined by the above formula, or be assigned an identical value according to the theory of physiological optics. The identical value A may be the minimum between $A_R$ and $A_L$, the average of AR and $A_L$, the value which has best balance with convergence, the value with which the most clear retinal image can be obtained etc.. In this embodiment the identical value A is assigned to be $A_R$ and $A_L$.

In the case of binocular vision, not only the residual power astigmatism of both eyes, but also the difference between the right and left eye need to be reduced. Here an average wavefront and a differential wavefront are defined as:

$$x_{ave} = \frac{1}{2}(x_R + x_L),$$

$$x_{diff} = (x_R - x_L),$$

the residual power astigmatism can also be used as the binocular residual corrective error.

Although the ray tracing calculation must be carried out with respect to all object points within the visual field to derive the binocular residual corrective error, it is possible to derive them with less calculation while controlling the calculation errors within a certain range by using a mathematical method called spline interpolation.

b. Deriving the convergence and the binocular vertical deviation

When an observer views an object in the visual field with both of his eyes, as shown in Fig. 3, he notices that the object point is located at a direction of the version component of the binocular rotation and at a distance which can be derived from the angle β of the convergence. When he wears spectacle lenses and views the same object point, the directions of both right and left visual line, i.e. monocular rotation change have been changed as shown in Fig. 4. If an intersection P' at both extension of directions of monocular rotation $Q_RO_R$ and $Q_LO_L$ exists, the angle of convergence is the angle $O_LP'O_R$. However, P' dose not always exist.

As shown in Fig. 5, the right visual line plane, which contains $Q_RO_R$ (whose unit vector is $\bar{r}_R$) and $O_RO_L$, and the left visual line plane, which contains $Q_LO_L$ (whose unit vector is $\bar{r}_L$) and $O_RO_L$, are not overlapping each other. As described in the step of creating distorted original image, the point of convergence fixation (P') should be redefined in this case. In the present invention, a binocular visual plane is defined as the plane containing the direction $\bar{r} = \frac{\bar{r}_R + \bar{r}_L}{|\bar{r}_R + \bar{r}_L|}$, the bisector of the angle between $\bar{r}_R$ and $\bar{r}_L$, and $O_RO_L$. Both projections of $\bar{r}_R$ and $\bar{r}_L$ on the binocular visual plane must have a point P' at which they intersect with each other. The point P' is then defined as the point of convergence fixation and the angle β of the convergence is defined as the angle $O_LP'O_R$. β equals 0 when P' is at the infinite distance. β takes a negative value when P' is at the back side since both eyes are divergent.

The amount of convergence can also be evaluated by the reciprocal of the distance OP' or approximately

$$P_{Conv} = \frac{1}{OP'} \approx \frac{2\tan\frac{\beta}{2}}{d\cos\zeta}.$$

(ref. Fig. 3 and 4). The value is defined as the power of convergence in this invention. With this definition, we can easily compare the accommodation and convergence, both of them have close relationship with each other according to physiological optics. When the object point is viewed without spectacle lenses, the power of convergence and the power of accommodation are almost equal. When a pair of spectacle lenses is worn, a disagreement between them may occur. This disagreement may be the reason of discomfort while wearing spectacle lenses. Therefore a binocular performance index can be defined as $P_{conv} - A$, where A is the identical power of accommodation determined in the step of deriving the binocular residual corrective error.

Another reason of discomfort while wearing spectacle lenses may be the vertical deviation between right and left direction of monocular rotation. As shown in Fig. 5, in the case of both visual line plane do not agree with each other, both eyes must vertically rotate a different angle with each other. This may cause discomfort because both eyes always vertically rotate same angle according to the physiology of the eye. The situation is similar to the case of hyperphoria or hypophoria. Therefore a binocular performance index can be defined as the difference of the vertical rotation angles between two eyes.

The angle of convergence and the vertical deviation can be obtained from the quadrangular pyramid in the lower portion of the diagram shown in Fig. 5, where $\bar{r}_R$ and $\bar{r}_L$ are the unit vectors of the right and left direction of monocular rotation, $\bar{r} = \frac{\bar{r}_R + \bar{r}_L}{|\bar{r}_R + \bar{r}_L|}$ is the bisector of the angle between $\bar{r}_R$ and $\bar{r}_L$, the line AB is placed on the binocular visual line plane which contains $O_RO_L$ and $\bar{r}$, the line CD is placed on a plane which contains $\bar{r}$ and is perpendicular to the binocular visual line plane. The angle of convergence is derived as β = ∠AOB and the angle of vertical deviation is derived as δ = ∠COD. For convenience, the vertical deviation is redefined as 200 tanδ2 which has the unit of prism diopter.

Although the ray tracing calculation must be carried out with respect to all object points within the visual field to derive the angles of convergence and vertical deviation for viewing them, it is possible to derive the angles with less calculation while controlling the calculation errors within a certain range by using a mathematical method called spline interpolation.

c. Deriving point deformation indexes

This step is a step of deriving a monocular and binocular point deformation indexes indicating degree of deformation while viewing an object point through specific positions on each of right and left spectacle lens, or both lenses. According to the present invention, the point deformation is considered to be like a small circle centered at the object point which changes its shape while viewing through the spectacle lenses. In most cases the deformed shape can be considered as an ellipse, so the point deformation index can be defined using the parameters of an ellipse.

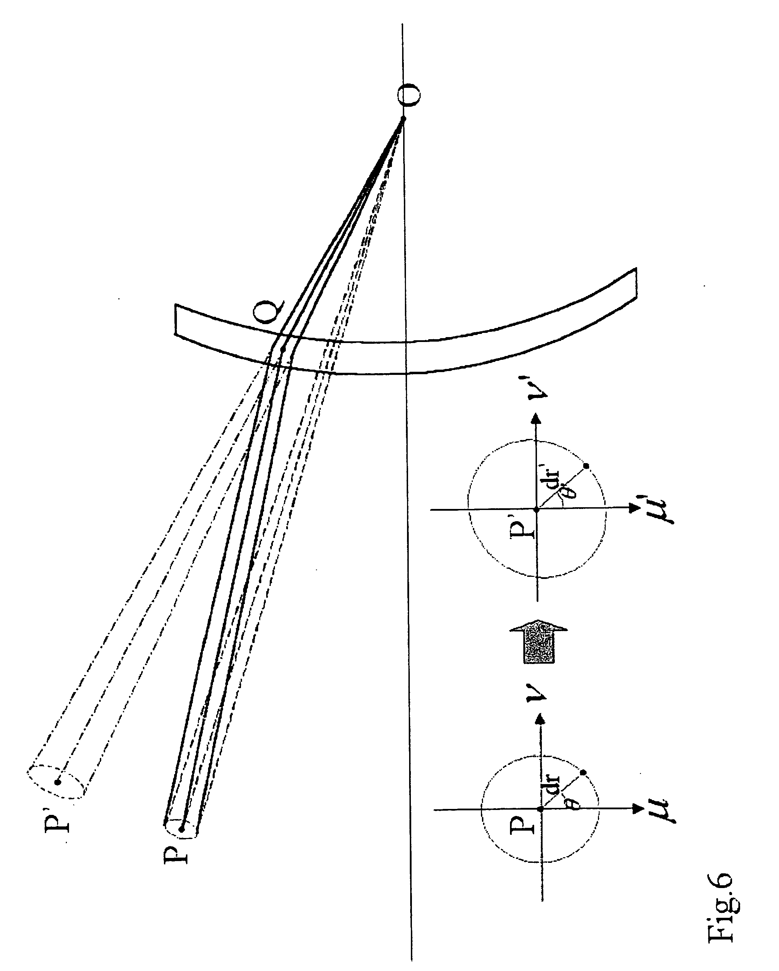

The deformed ellipse is obtained by tracing nearby rays of the principal ray from the object point. As shown in Fig. 6, tracing each principal ray from each point $(dr,\theta)$ on a small circle orbit of radius dr centered at object point P, its position in after-lens space $(dr',\theta')$ can be obtained and its locus, i.e., the deformed ellipse, can be obtained. Here dr does not mean a length in the space, it means a tangent of the differential angle from OP.

Practically, it is not necessary to trace all principal rays from points on the circle. If the value of the partial derived function of differential angle in after-lens space to differential angle in object space $\frac{\partial\mu'}{\partial\mu}, \frac{\partial\mu'}{\partial v}, \frac{\partial v'}{\partial\mu}, \frac{\partial v'}{\partial v}$, is obtained, or, conversely, if the partial derived function of differential angle in object space to differential angle in after-lens space $\frac{\partial\mu}{\partial u'}, \frac{\partial\mu}{\partial v'}, \frac{\partial v}{\partial u'}, \frac{\partial v}{\partial v'}$, is obtained, the deformed ellipse can be fixed. The latter case can be explained, wherein the partial derived functions are rewritten as $\frac{\partial \mu}{\partial u'} = A, \frac{\partial \mu}{\partial v'} = B, \frac{\partial v}{\partial \mu'} = C, \frac{\partial v}{\partial v'} = D$ :

$$d\mu = Ad\mu' + Bdv'$$

$$dv = Cd\mu' + Ddv'$$

$$dr^2 = d\mu^2 + dv^2$$

$$= \left(A^2 + C^2\right)d\mu'^2 + 2(AB + CD)d\mu'dv' + \left(B^2 + D^2\right)dv'^2$$

$$= dr'^2 \left( \frac{A^2 + B^2 + C^2 + D^2}{2} + \frac{A^2 - B^2 + C^2 - D^2}{2} \cos 2\theta' + (AB + CD)\sin 2\theta' \right)$$

Therefore

$$\left(\frac{dr'}{dr}\right)^2 = \frac{p}{1 + e \cos 2(\theta' - \alpha)} \ .$$

Here

$$p = \frac{2}{A^2 + B^2 + C^2 + D^2},$$

$$e = \frac{\sqrt{(A^2 - B^2 + C^2 - D^2)^2 + 4(AB + CD)^2}}{A^2 + B^2 + C^2 + D^2} = \frac{\sqrt{(A^2 + B^2 + C^2 + D^2)^2 - 4(AD - BC)^2}}{A^2 + B^2 + C^2 + D^2}$$

$$\tan 2\alpha = \frac{AB + CD}{A^2 - B^2 + C^2 - D^2}.$$

It is apparent that $p > 0$, and $0 < e < 1$. Therefore the relationship between the magnifying power $\frac{dr'}{dr}$ and the azimuth θ' saveshould be an ellipse. This ellipse is called a point deformation ellipse. The maximum and minimum magnifying power, i.e., the major and minor axis of the point deformation ellipse are, respectively,

$$a = \sqrt{\frac{p}{1 - e}},$$

$$b = \sqrt{\frac{p}{1 + e}}.$$

In the present invention, a scale factor $\sqrt{ab}$, a ratio of major axis to minor axis $\frac{a}{b}$ and a combination of the two values are defined as a point deformation index indicating a degree of deformation. Here,

$$\sqrt{ab} = \sqrt{\frac{p}{\sqrt{1 - e^2}}} = \dots = \frac{1}{|AD - BC|}, \quad \frac{a}{b} = \sqrt{\frac{1 + e}{1 - e}}.$$

Three point deformation ellipses, the monocular point deformation ellipse based on the direction of monocular rotation for the right eye, for the left eye and the binocular point deformation ellipse based on the direction of binocular rotation, are derived with the method described above. Not only the binocular point deformation, but also the disagreement of monocular point deformations, can cause discomfort while viewing the object point binocularly. The disagreement is called aniseikonia. As an index of indicating the aniseikonia, the inventor defined a ratio of scale factors

$$\sqrt{\frac{a_R b_R}{a_L b_L}}.$$

Also it is equivalent to the square root of the area of the right point deformed ellipse to the area of the left point deformed ellipse.

Although the ray tracing calculation must be carried out with respect to all object points within the visual field to derive the point deformation ellipses for viewing them, it is possible to derive them with less calculation while controlling the calculation errors within a certain range by using a mathematical method called spline interpolation. Besides tracing the nearby principal rays, $\frac{\partial \mu}{\partial u'}, \frac{\partial \mu}{\partial v'}, \frac{\partial v}{\partial u'}, \frac{\partial v}{\partial v'}$ can also be derived by calculating the values of a partial derived function of a spline interpolation function of previously-obtained principal ray data.

d. Deriving PSFs

This step describes how to evaluate the clearness of viewing an object point binocularly. It comprises deriving both right and left monocular PSFs, and uniting them to a binocular PSF. With respect to each of the object points, each of which corresponds to a pixel of the original image, both distances from the object point to the right and left centers of monocular rotation are obtained from the objective distance obtained in the original image creating step. The powers of accommodation of right and left ocular optical system are determined with the method described in the step of deriving binocular residual corrective error. A monocular PSF is derived for each of the right and left eyes in a composed optical system comprising the spectacle lens and the accommodation-dependent ocular optical system, which is rotated in accordance with the direction of monocular rotation. The binocular PSF is obtained by uniting both monocular PSFs. This step will be described more specifically as follows.

(i) Introduction of an accommodation-dependent ocular optical system

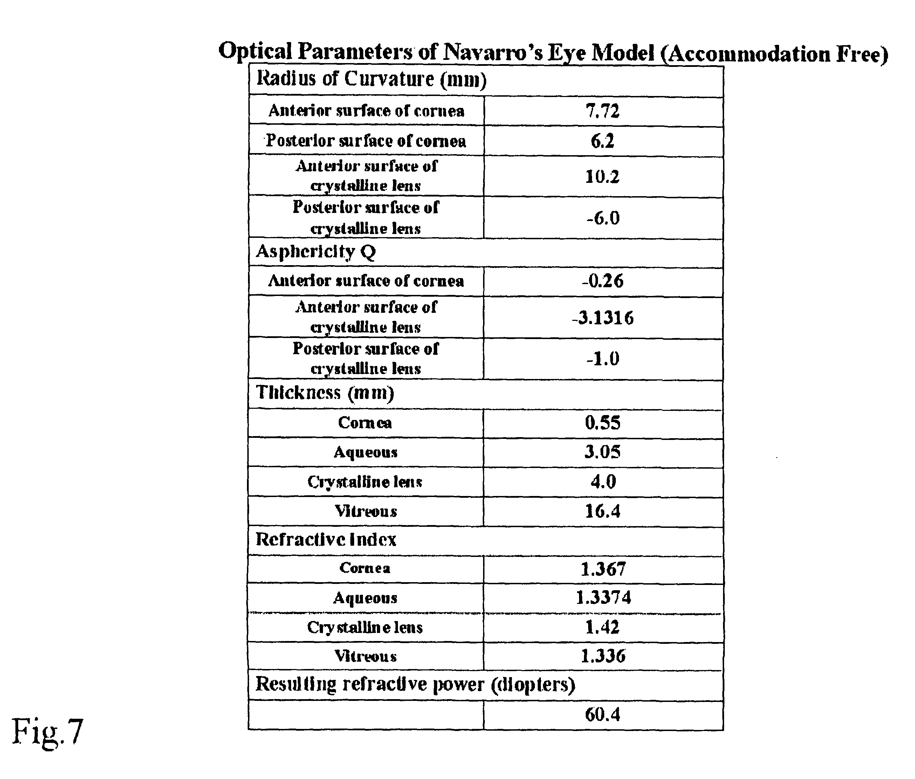

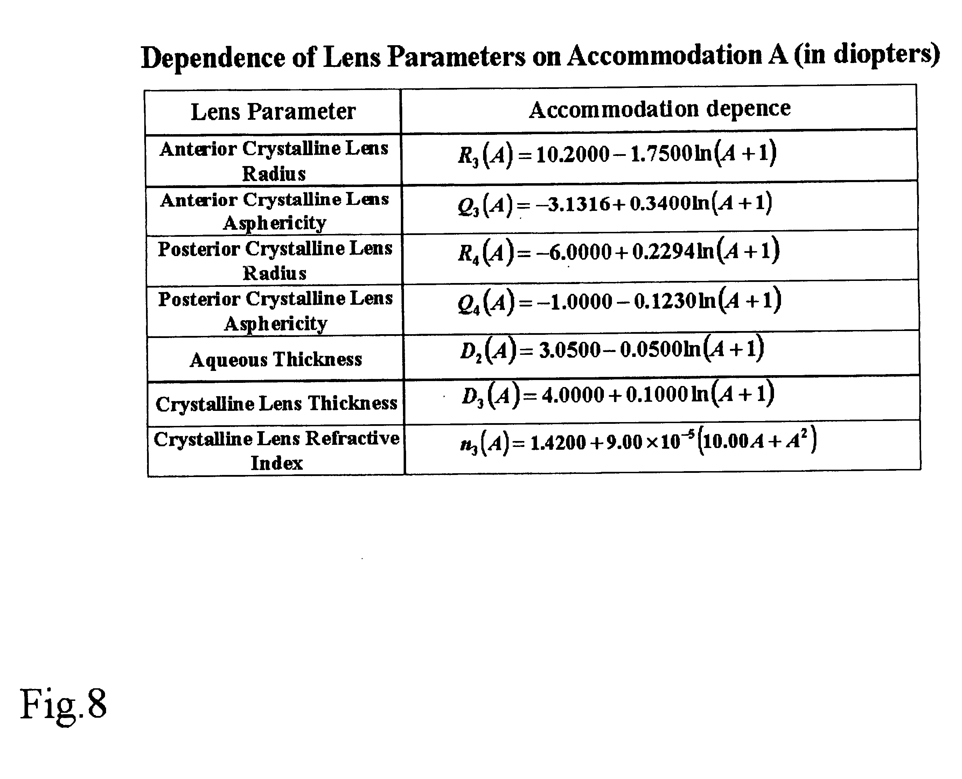

To obtain the PSF on the retina, the introduction of an ocular optical system is necessary. The eye has the function of accommodation in accordance with the distance to an object and this function should be taken into consideration. In the present embodiment, the accommodation-dependent ocular optical system reported by R. Navarro et al. is used. In the Navarro model, not only the paraxial value but also the spherical aberration and the chromatic aberration are adjusted to the actually-measured values of an eye. The model has a simple four-surface structure and three surfaces among the four surfaces are aspheric axially symmetrical quadratic surfaces. Since the crystalline lens does not have a gradient index, the tracing calculation can be conducted easily. The radius of curvatures, the thickness and the degrees of asphericity change in proportion to the logarithm of the power of accommodation. Fig. 7 shows a table listing ocular optical parameters of the Navarro model in the state without accommodation. Fig. 8 shows a table listing accommodation dependencies of ocular optical parameters. The aspherical surface is expressed as $y^2+z^2+(1+Q)x^2-2rX=0$, wherein Q represents the degree of asphericity.

(ii) Deriving a monocular PSF

A) Meaning of PSF

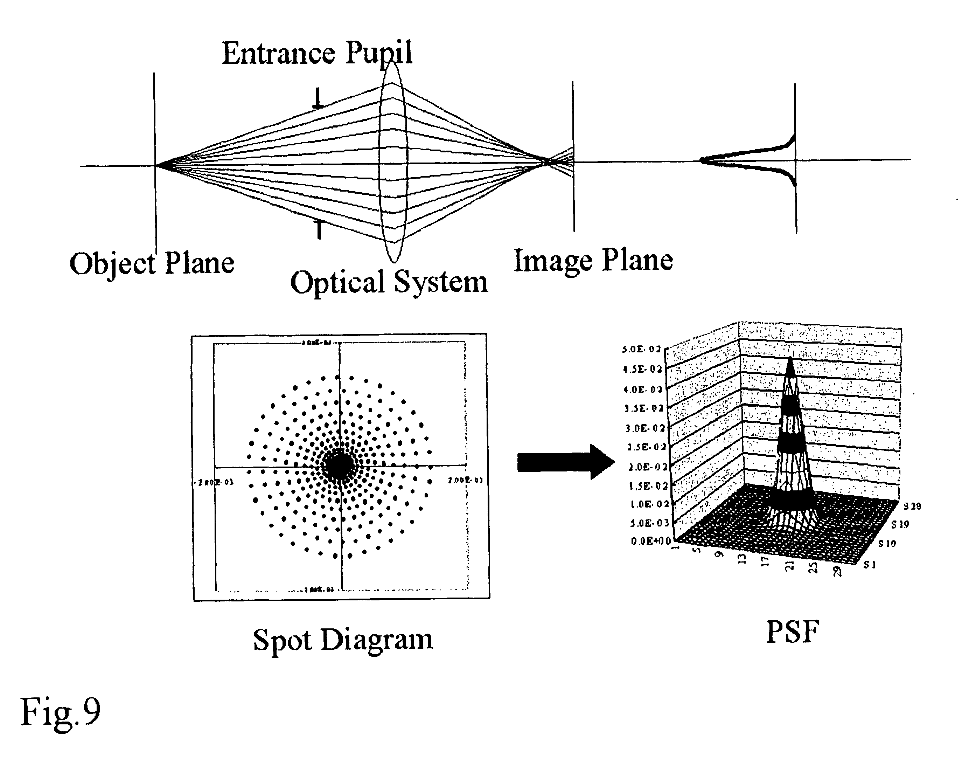

As shown in Fig. 9, PSF is the function showing the concentration of a cluster of spots on the image plane of rays, which are emitted, from an object point. The function can be expressed as the distribution of the density of spots. In a perfect optical system, all spots are concentrated at the image point and the distribution of PSF becomes a straight line perpendicular to the image plane. However, in general, the distribution has a broader shape similar to a Gaussian distribution.

B) Method for deriving PSF

Fig. 10 shows the composite optical system for obtaining the PSF when a point P is seen through a position Q on a spectacle lens. The ray emitted from the object point P is refracted at the point Q on the surface of the lens. The ray changes its direction at Q towards the center of monocular rotation O. To the eye, the object point P is seen as if the object point were located on the extension of the direction QO. As described above, when the point P is seen, the optical axis of the eyeball is rotated in the direction QO and the power of accommodation is set in accordance with the distance to the object point P and the refractive power at the point Q. The accommodation is performed based on the result. When the accommodation has been completed, the optical system is fixed and PSF can be derived.

As described above, PSF is the densities of spots on the image plane of rays, which are emitted from an object point, pass through each of many points equally distributed on the entrance pupil. The entrance pupil, exactly, is located at the conjugative position of the iris pupil in the object side. However, the iris pupil changes its position while the eye is rotated, also its conjugative position in the object side moves dependent on the accommodation. On the other hand, the center of monocular rotation is placed at a fixed position and the distance to the conjugative point of the iris pupil is much smaller than the distance to the object point. Therefore, when no spectacle lens is placed in front of an eye, it causes no problems to assume that the entrance pupil is located at the center of monocular rotation. When a spectacle lens is placed in front of the eye, the entrance pupil of the entire optical system should be located at the conjugative point of the center of monocular rotation via the spectacle lens. However, the position varies delicately when a progressive addition lens is used since the power is different depending upon the position of the lens at which the ray passes. Since the amount of the variation is much smaller than the distance to the object point, it can be assumed that the position of the entrance pupil is located at a point O' on the extension of the line PQ which satisfies PO=PO'.

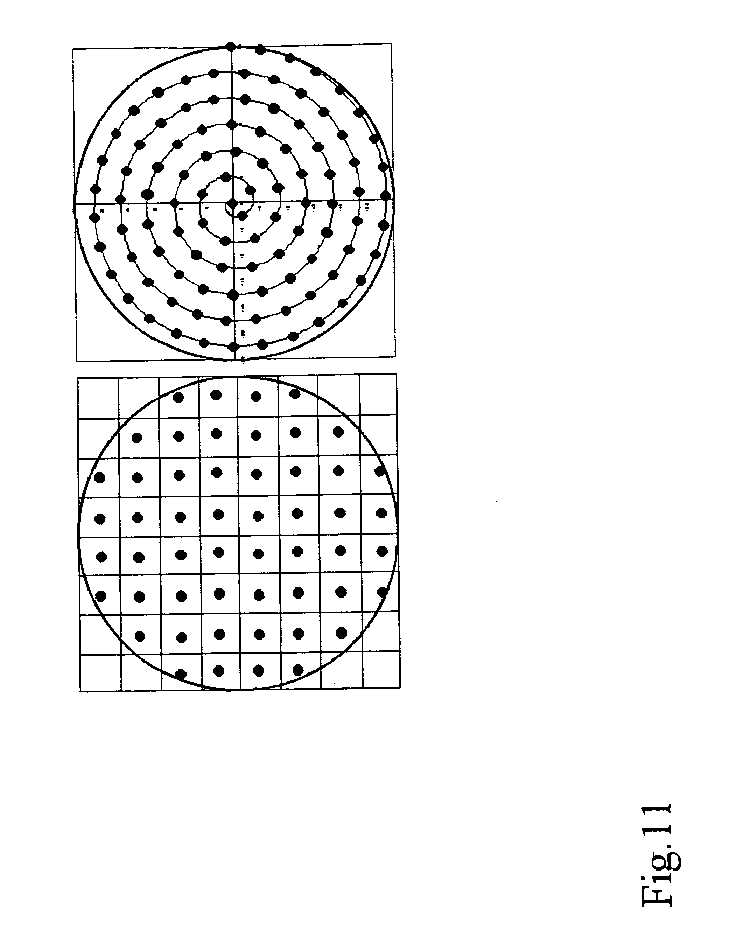

To obtain an accurate PSF, it is important that the entrance pupil is divided into many uniformly distributed small areas. There are two kinds of dividing methods: grid division and spiral division as shown in Fig. 11. Although grid division allows good uniformity to be obtained, it allows tracing of only about 70 % of a predetermined number of rays because it has wasteful parts at its four corners. On the other hand, spiral division causes no wasteful ray tracing while maintaining uniformity. Spiral division is therefore adopted in the present embodiment.

As described above, the PSF can be obtained by tracing many rays emitted from the object point and passing through points obtained by uniformly splitting the entrance pupil, and calculating the density of the spots on the retinal surface. Although rays emitted from each object point and passing through each divided point of the entrance pupil must be traced to obtain the PSF with the method described above, the use of spline interpolation allows the position of the spots on the retina to be calculated with less calculation within a given error range, and, thus, the PSF, which is the density of spots on the surface of retina, can be obtained.

When the distorted original image and the PSF obtained in accordance with the above method are convoluted, blur, which is found when external things are observed through a spectacle lens, can be accurately reflected. However, obtaining the PSF in accordance with the above method requires a long time for calculation and is not convenient for conducting a quantitative analysis of the imaging performance of a lens. A quantitative analysis can be easily conducted by approximating the PSF to a suitable type of function and using the parameters of the function for the calculation. A method for approximating the PSF with a two-dimensional normal distribution function will be described as follows.

In the following two dimensional normal distribution function:

$$p(\mu,\nu) - \frac{1}{2\pi\sigma_\mu\sigma_\nu\sqrt{1-\rho^2}}\exp\left(-\frac{1}{2(1-\rho^2)}\left(\frac{\mu^2}{\sigma_\mu^{\,2}} - 2\rho\frac{\mu\nu}{\sigma_\mu\sigma_\nu} + \frac{\nu^2}{\sigma_\nu^{\,2}}\right)\right)$$

$\mu$ and $\nu$ represent the deviation in the vertical and horizontal directions, respectively, on the retina and $\sigma_\mu, \sigma_\nu$ and $\rho$ represent parameters of a normal distribution. These parameters satisfy the following relations:

$$-1 < \rho < 1$$

$$\sigma_\mu > 0$$

$$\sigma_\nu > 0$$

The locus of the point at which the exponent in the above equation has the value of -1/2 is an ellipse expressed by:

$$\frac{\mu^2}{\sigma_\mu^{\,2}} + \frac{\nu^2}{\sigma_\nu^{\,2}} - \frac{2\rho\mu\nu}{\sigma_\mu\sigma_\nu} = 1 - \rho^2$$

The above ellipse can express the spreading range of the PSF. The ratio of the length of the major axis to the length of the minor axis and the direction of the major axis of the ellipse are closely related to the degree and the direction of astigmatism.

The method for obtaining the parameters $\sigma_\mu$, $\sigma_v$, $\rho$ of the two-dimensional normal distribution function from the ray data is selected to be a method in which statistical values of spots which are scattered on the image plane ($\mu$, $v$) (each spot corresponding to each dividing point on the entrance pupil) are obtained and the obtained values are used as the parameters $\sigma_\mu$, $\sigma_v$, $\rho$. Thus, the values can be obtained as follows:

[Formula 16]

$$\sigma_{\mu 0} = \sqrt{\frac{1}{N}\sum_i \mu_i{}^2}$$

$$\sigma_{v 0} = \sqrt{\frac{1}{N}\sum_i v_i{}^2}$$

$$\rho = \frac{\frac{1}{N}\sum_i \mu_i v_i}{\sigma_\mu \sigma_v}$$

In the above formulae, N represents the number of rays and ($\mu_i$, $v_i$) represents the coordinates of a spot. When $\sigma_{\mu 0}$, $\sigma_{v 0}$ and $\rho$ are directly used as the parameters of the approximating normal distribution, there is the possibility that the result is different from the actual PSF depending on the condition of the distribution. In such a case, it is necessary that a suitable proportional constant $k$ be selected and the parameters be adjusted as $\sigma_\mu = k\sigma_{\mu 0}$ and $\sigma_v = k\sigma_{v 0}$.

As described above, the parameters of the two-dimensional normal distribution function approximating the PSF can be obtained by using the statistical values of ray spots on the retina. It is occasionally convenient that the two-dimensional normal distribution function is expressed as a function of polar coordinates. By substituting $\mu = r \cos\theta$ and $v = r \sin\theta$ into the above equation and rearranging the resultant equation, the following equation can be obtained:

$$p(r,\theta) = \frac{\sqrt{A^2 - B^2}}{2\pi}\exp\left(-\frac{r^2}{2}\left(A - B\cos(2\theta - 2\alpha)\right)\right)$$

The parameters can be converted as follows:

$$A = \frac{1}{2(1-\rho^2)}\left(\frac{1}{\sigma_\mu{}^2} + \frac{1}{\sigma_v{}^2}\right)$$

$$B = \frac{1}{2(1-\rho^2)}\sqrt{\left(\frac{1}{\sigma_\mu{}^2} - \frac{1}{\sigma_v{}^2}\right)^2 + \frac{4\rho^2}{\sigma_\mu{}^2\sigma_v{}^2}}$$

$$\tan 2\alpha = \frac{2\rho\sigma_\mu\sigma_v}{\sigma_\mu^2 - \sigma_v^2}$$

When the PSF is approximated with the two-dimensional normal distribution function and the parameters of the latter function are obtained as described above, although it is necessary to carry out ray tracing and statistical calculation to obtain the parameters of the two-dimensional normal distribution function for all object points, the amount of calculation can be reduced while the calculative error can be controlled within a certain range using spline interpolation.

(iii) Deriving a binocular PSF

The visual acuity with both eyes is generally said to be better than the visual acuity with a single eye. Therefore, the binocular PSF is expected to have a sharper shape than the right or left monocular PSF individually. In the present embodiment, uniting both right and left monocular PSFs in accordance with the following principles derives the binocular PSF:

  1. When the monocular PSF for the right eye and the monocular PSF for the left eye are close to each other, the united PSF is of a distribution, which is more concentrated than each distribution of both monocular PSFs;
  2. When the monocular PSF for the right eye and the monocular PSF for the left eye are different from each other to a great degree, the united PSF is of a distribution which is close to the most concentrated distribution between both monocular PSFs; and
  3. Continuity and uniqueness of the united PSF are maintained.

As an example of the method for deriving the united binocular PSF from the right and left monocular PSF, the following method is proposed. PSF is approximated with a normal distribution function, which is represented by an ellipse:

$$r^2 = \frac{1}{(A - B\cos(2\theta - 2\alpha))}$$

When the parameters of the ellipse representing the right monocular PSF are represented by $A_R, B_R$ and $\alpha_R$ and the parameters of the ellipse representing the left monocular PSF are represented by $A_L, B_L$ and $\alpha_L$, the parameters $A, B$ and $\alpha$ of the ellipse representing the united binocular PSF can be obtained as shown in the following:

$$\frac{1}{r^2} = \frac{1}{r_R^2} + \frac{1}{r_L^2} = A_R + A_L - (B_R\cos(2\theta - 2\alpha_R) + B_L\cos(2\theta - \alpha_L))$$

$$= A - B\cos(2\theta - 2\alpha)$$

The above equation leads to the following relations:

$$A = A_R + A_L$$

$$B = \sqrt{B_R^2 + B_L^2 + 2B_RB_L\cos 2(\alpha_R - \alpha_L)}$$

$$\tan 2a = \frac{B_R\sin 2\alpha_R + B_L\sin 2\alpha_L}{B_R\cos 2\alpha_R + B_L\cos 2\alpha_L}$$

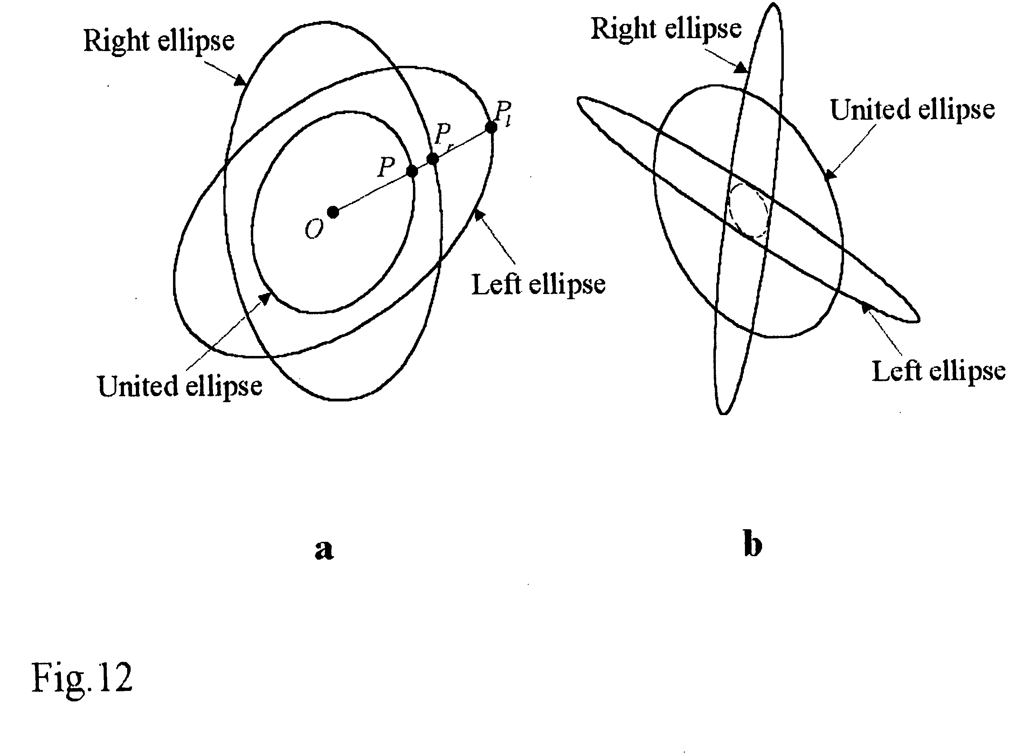

Fig. 12a shows ellipses representing the right and left monocular PSF (the right and left ellipses, respectively) and an ellipse representing the united binocular PSF (the united ellipse). The above method is occasionally not applicable. In the case shown in Fig. 12b, both eyes have great astigmatisms and the directions are different, and the united binocular PSF distributes within an inadequately small area. Therefore, it is necessary to adjust the size of the united ellipse in accordance with the similarity of the right and left ellipses. For example, the adjustment is made by multiplying the area of the ellipse obtained above by a coefficient $\kappa = 2Sc/(S_R+S_L)$, wherein k is the ratio of the area of a common portion S, of both right and left ellipse to the average of areas of both ellipses $(1/2)x(S_R+S_L)$. The result of the adjustment can be expressed as:

$$A = \kappa(A_R + A_L)$$

$$B = \kappa\sqrt{B_R^2 + B_L^2 + 2B_RB_L \cos(\alpha_R - \alpha_L)}$$

$$\tan 2\alpha = \frac{B_R \sin 2\alpha_R + B_L \sin 2\alpha_L}{B_R \cos 2\alpha_R + B_L \cos 2\alpha_L}$$

When the united binocular PSF is approximated with the two-dimensional normal distribution function and the parameters of the latter function are derived as described above, although it is necessary to derive parameters of each right and left monocular PSF and further the binocular PSF for all object points, the amount of calculation can be reduced while the calculation error is controlled within a certain range using spline interpolation.

(iv) Deriving a clearness index from PSF

The clearness index indicates a scale of a spreading range of the PSF. The smaller it is, the finer the image quality is and the visually clearer it is. The spreading range of a PSF, approximated by a two-dimensional normal distribution function, may be represented by an ellipse, as mentioned above. So the clearness index of that PSF may be defined as a value that indicates the size of the ellipse. There are several sizes to be selected like the area, $\sigma_\mu + \sigma_v$, $\sigma_\mu \sigma_v$, $\sqrt{\sigma_\mu^2 + \sigma_\upsilon^2}$ etc. If the area of the ellipse is defined as a clearness index, the clearness index is zeroed when the ellipse is degenerated to a line segment. A zero clearness index means that the image quality is good no matter how big the residual astigmatism is. It is therefore not appropriate to define the area of the ellipse as the clearness index. Also, it should be assured that the means half diagonal length of a rectangle that circumscribes the ellipse, is defined as clearness index.

(5) Creating binocular performance index image

This step is a step of creating a binocular performance index image and overlaying the lens frame mark image created in the frame position-obtaining step on the binocular performance index image. The binocular performance index image is based on the original image or distorted original image. For each pixel a monochromatic luminance or a set of luminances of three primary colors of RGB is assigned in accordance with the value of performance index of the object point corresponding to the pixel obtained in the performance index obtaining step.

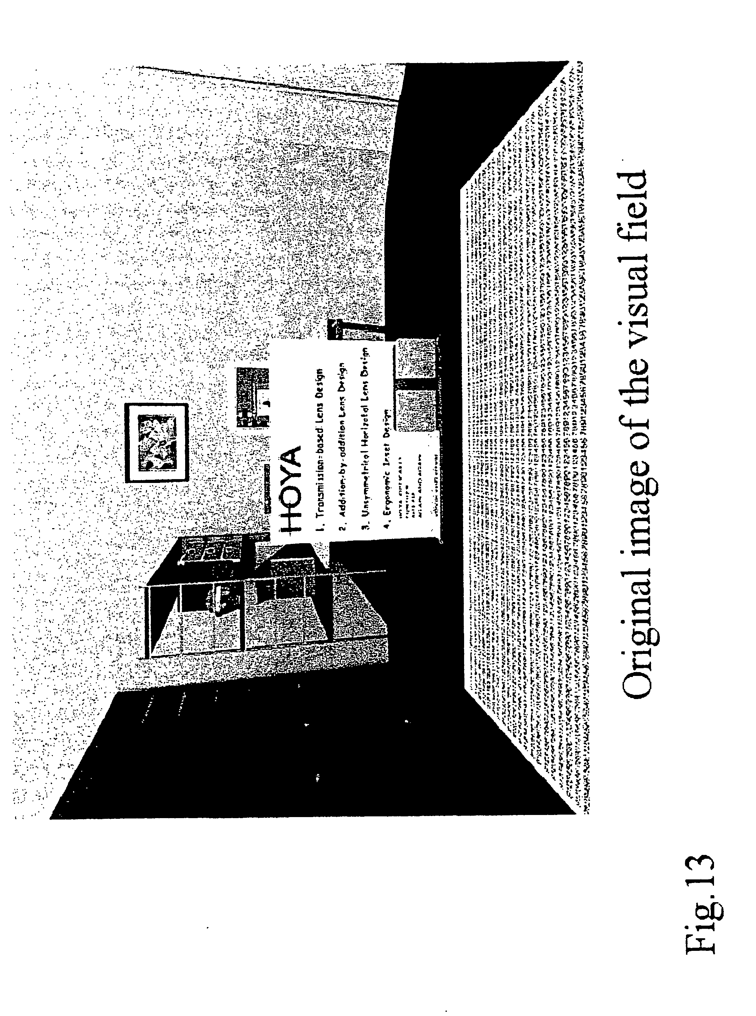

Fig. 13 to 19 show images of various binocular performance indexes obtained in the first embodiment. Both spectacle lenses are progressive addition lenses and have distant-vision power 0.00D with addition of 2.50D. Fig. 13 shows an original image of the first embodiment which shows scenery in a room. The distance from the eyes to the wall is 2.5 m and the distance from the eyes to the whiteboard on the desk is about 80 cm. The visual field is 96° in the horizontal direction and 80° in the vertical direction.

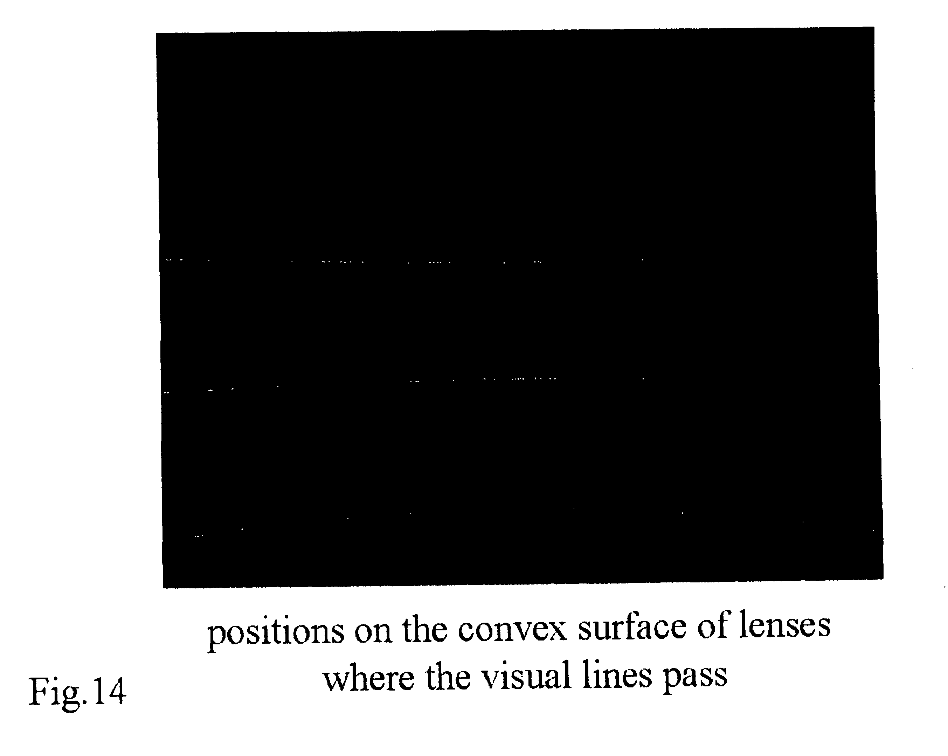

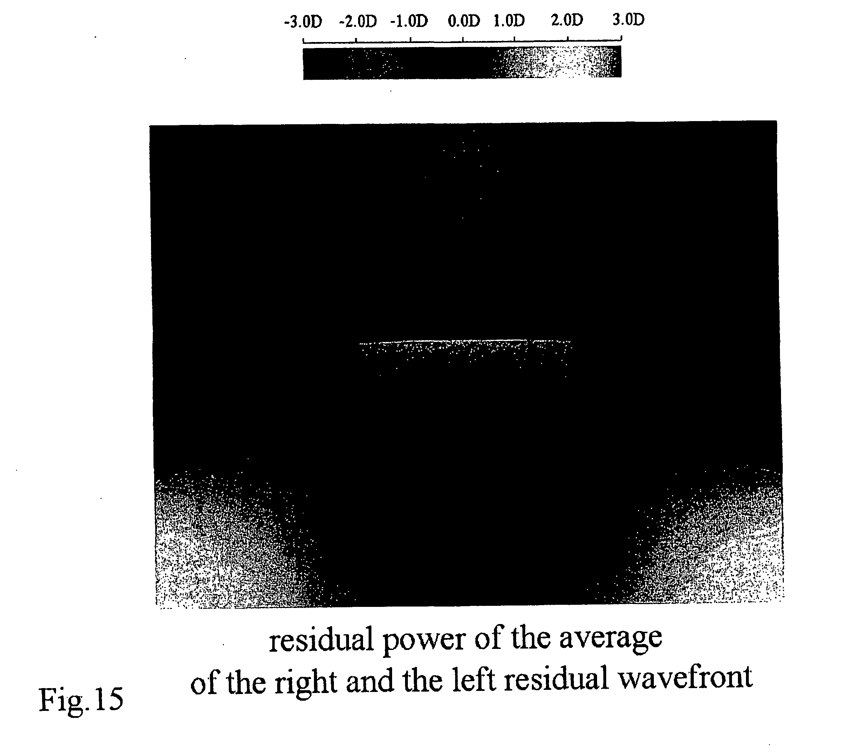

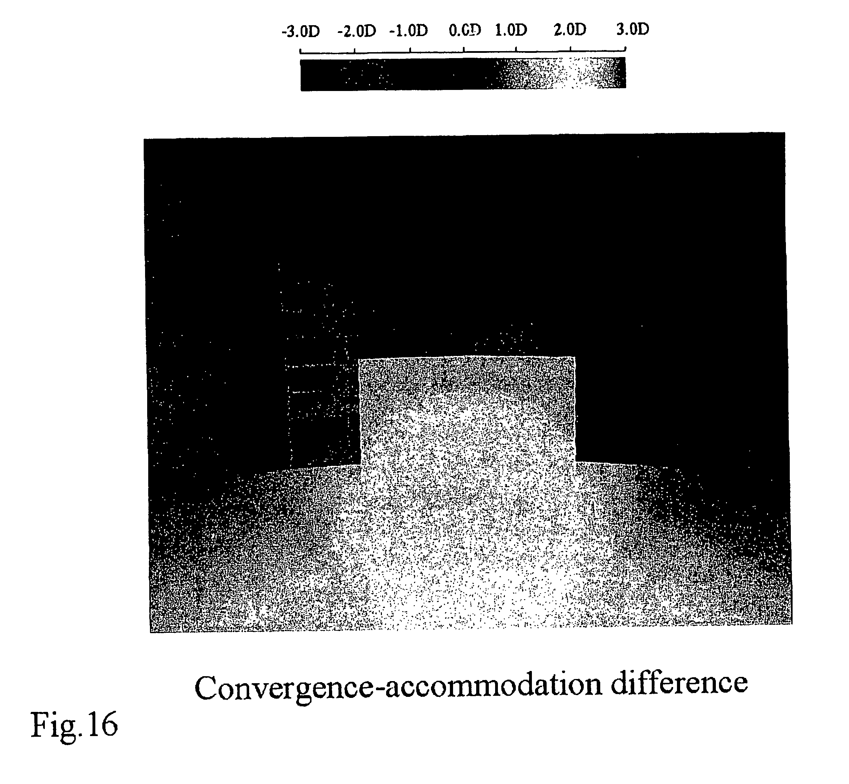

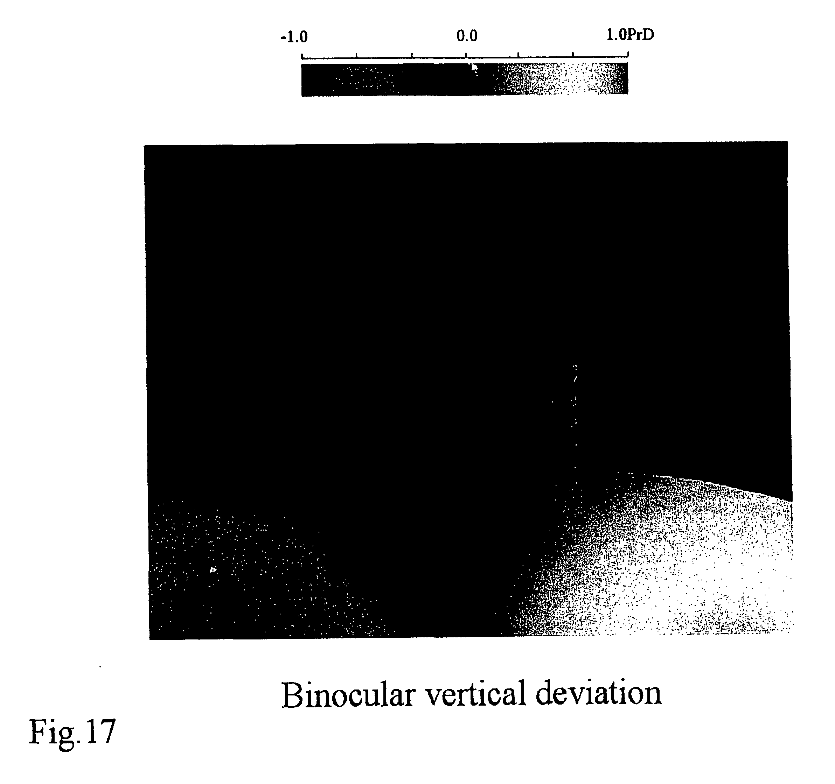

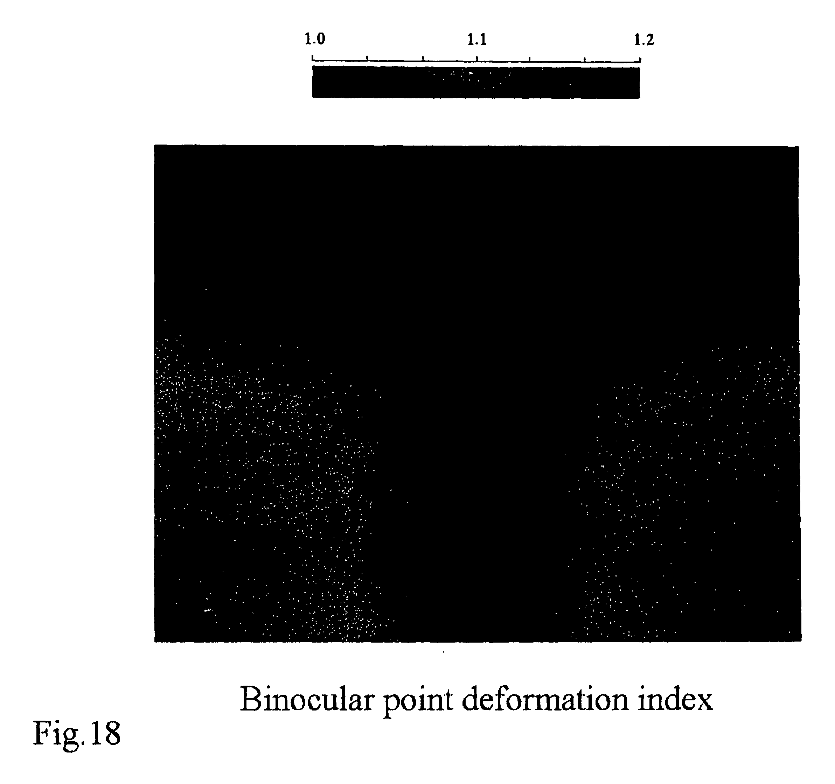

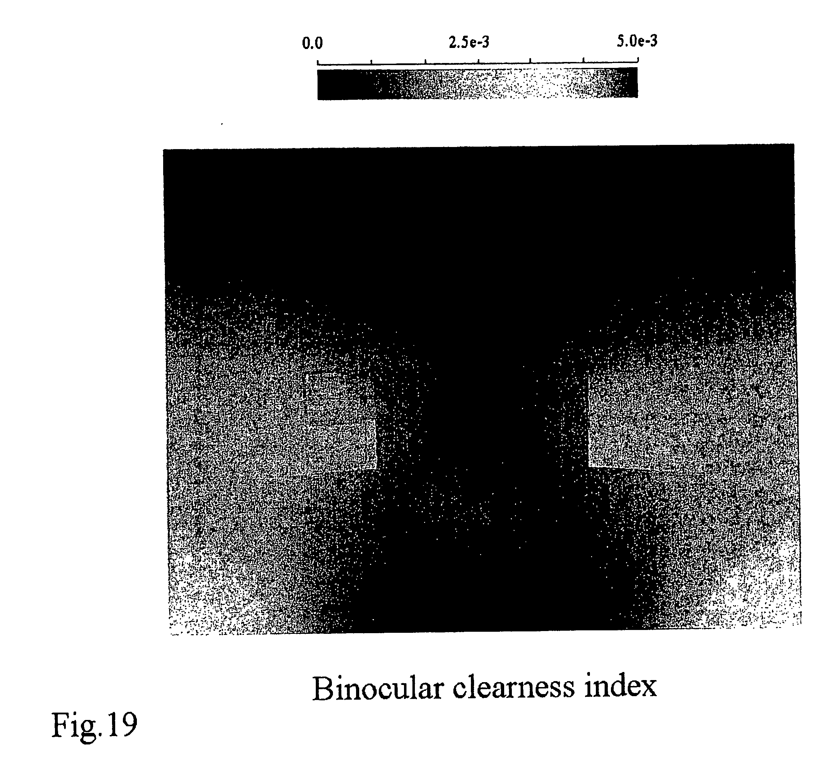

Fig. 14 is a map of the positions on the convex surface of a lens where the visual lines pass. The red lines are for the right lens and the blue lines are for the left lens. The pitch of the grid is 1 0mm and the distance between diameters of concentric circles having the center at the geometric center of the lens is also 10 mm. Fig. 15 shows the image of residual power of the average of the right and the left residual wavefront. Fig. 16 shows the image of the convergence-accommodation difference. Fig. 17 shows the image of the binocular vertical deviation. Fig. 18 shows the image of the binocular point deformation index. The point deformation index is defined as the ratio of the major axis to the minor axis of the binocular deformation ellipse. Fig. 19 shows the image of the binocular clearness index. The clearness index is the size of the binocular PSF expressed by the tangent of the visual angle.

In accordance with the present embodiment, binocular performances of spectacle lens in the situation of viewing actual scene can be evaluated through images of the visual field.

B. second embodiment

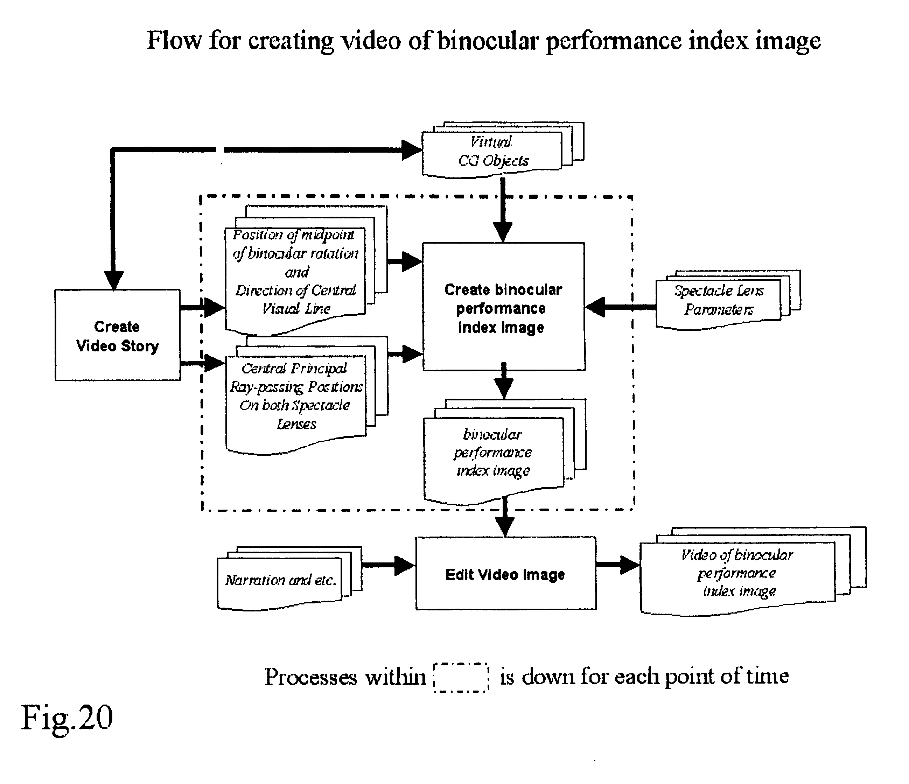

The second embodiment comprises obtaining a video image by creating a large number of still images of the performance index distribution image in the first embodiment in a time-series manner by changing the position of the eye and the direction of sight line. The present embodiment is basically the same as the first embodiment except the added steps of creating a movie story including, for example, the position of the eye, the direction of the sight line, and the motion and deformation of the virtual object point change in a time-series manner. The embodiment also comprises editing the respective still images obtained in a time-series manner as a motion picture image in creating the original image. Thus, a detailed discussion of the overall flow shown in Fig. 20 is unnecessary and will be omitted. It is noted that a movie story at the lens passing point is required in the movie story. Spline interpolation can be utilized for creating the story and allows a smooth motion of visual line to be realized without defining the position of the eye, the direction of visual line and the lens passing point at all points in time.

The second embodiment described above allows the motion video image to be obtained in reproducing the effect of changing the position of the eye, moving the visual line and changing the passing position of the visual line on the lens, which is the performance in seeing the outside world through a progressive addition lens, for example. Accordingly, it becomes possible to evaluate the image forming performance of the spectacle lens in a mode very close to actual use. Further, it becomes possible to evaluate the lens while confirming the movement of the visual line on the lens by indicating the lens frame mark on a video image indicating screen.

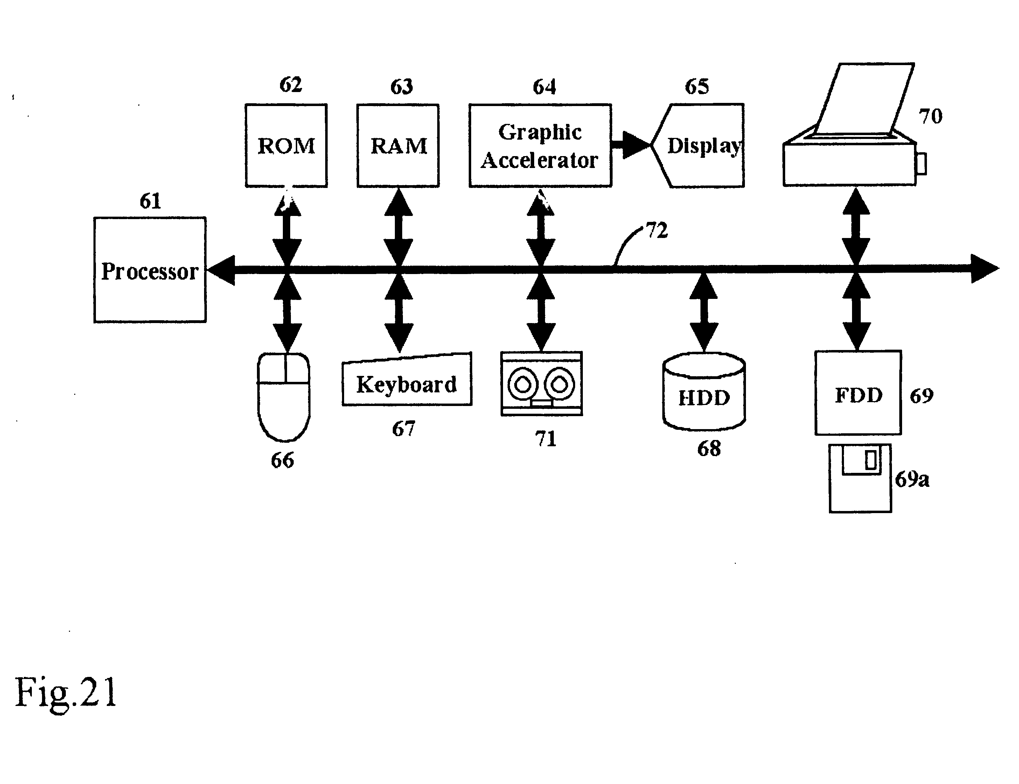

Next, an apparatus for embodying the methods described in the above-mentioned embodiments will be briefly explained. Fig. 21 is a block diagram showing the schematic structure of the apparatus for embodying the methods of the embodiments. As shown in Fig. 21, the apparatus comprises a processor 61, a read-only memory (ROM) 62, a main memory 63, a graphic control circuit 64, a display 65, a mouse 66, a keyboard 67, a hard disk drive (HDD) 68, an external storage (FDD) 69, a printer 70, a magnetic tape unit 71 and the like. These components are connected via a data bus 72.

The processor 61 generally controls the whole apparatus. Programs necessary in starting are stored in the read-only memory 62. Programs for creating and displaying the performance index distribution image are stored in the main memory 63. The graphic control circuit 64 contains a video memory and converts image data obtained into display signals to display on the display 65. The mouse 66 is a pointing device for selecting various icons and menus on the display. A system program and programs for creating and displaying the performance index distribution image are stored in the hard disk drive 68 and are loaded to the main memory 63 after the apparatus is turned on. It also, temporarily, stores data such as the performance index distribution image.

The external storage 69 inputs required data such as original image data through an external storage media 69a or saves it to the external storage media 69a as necessary. The printer 70 is used in printing out the performance index distribution image and the like. The magnetic tape unit 71 is used in saving programs and data to a magnetic tape as necessary. It is noted that the apparatus having the basic structure described above may be constructed by using a high-performance personal computer or a conventional general-purpose computer.

As described in detail above, the method and apparatus indicating the binocular performance of spectacle lenses according to the present invention are characterized in defining and finding the binocular performance index indicating the binocular performance of the spectacle lenses to all object points within a visual field when the outside world is observed through the spectacle lenses, and in indicating a value or scale of the performance index in a visually understandable display mode. Thereby, the present invention allows the binocular performance of the spectacle lens to be evaluated visually in a manner very close to its state of actual use.

Effect of the invention

The advantages of the present invention are summarized as follows. As described above in detail, a binocular performance index of spectacle lenses which expresses the binocular performance of spectacle lenses when each object point in the visual field is seen by an observer is defined and derived, the binocular performance of the spectacle lenses is evaluated using the derived binocular performance index and the result of the evaluation is displayed. Due to the evaluation and the display, the binocular performance of spectacle lenses can be evaluated and displayed in the condition very close to the actual use of the spectacle lenses.

**Claims**

1. A method for indicating binocular performance of spectacle lenses when a visual field is seen by an observer through right and left spectacle lenses comprising steps of:

   defining a binocular performance index which expresses the binocular performance of the spectacle lenses for viewing an object point in a visual field, and

   deriving binocular performance indexes for a plurality of object points distributed over said visual field, each object point corresponding to a pixel of an image which covers said visual field,

creating a binocular performance index image which covers said visual field, in which the monochromatic or RGB color luminosity of each pixel is assigned to indicate the value of the binocular performance index for viewing the corresponding object point,

displaying the scale of the obtained binocular performance indexes in a visually understandable mode,

wherein said step of creating a binocular performance index image further comprises the steps of:

creating an original image comprising the step of placing a midpoint of binocular rotation at a specific position, the midpoint of binocular rotation being a midpoint between centers of monocular rotation of right and left eyes, and the step of creating, as the original image, an image within a visual field defined as a specific

pyramidal field having an apex at the midpoint of binocular rotation;

creating a distorted original image by a ray tracing method, wherein the distorted original image is an image having distortion obtained by observing object points in the visual field through the spectacle lenses;

deriving positions of spectacle frames by creating images of spectacle frame marks that indicate positions of right and left spectacle frames on the original image or on the distorted original image by using data of the principal ray-passing positions obtained in the step of creating a distorted original image;

deriving binocular performance indexes with respect to the plurality of object points, each object point corresponding to a pixel of the original image or the distorted original image created above, in an optical system comprising the spectacle lenses and an ocular model;

creating virtual objects by using computer graphics and placing them in a virtual three-dimensional space;

creating a story of changes with time of the positions of eyes, the direction of a central visual line, the ray-passing positions in the right and left lenses and the amount of deformation and displacement of the virtual objects;

creating a binocular performance index image of spectacle lenses at each point of time by assigning, to each pixel of said original image or said distorted original image, a monocular luminance or luminances of three primary colors of RGB determined in accordance with the value of the binocular performance index derived in the step of deriving a binocular performance index, and overlaying the binocular performance index image with the frame mark images of spectacle frames created in the step of deriving positions of spectacle frames; and

editing binocular performance index images at all point of time into a video movie.

2. A method for indicating binocular performance of spectacle lenses according to claim 1, wherein the step of creating a binocular performance index image further comprises steps of:

(a) creating an original image, further comprising steps of:

(i) creating virtual objects by using computer graphics and placing the virtual objects in a virtual three-dimensional space;

(ii) placing a midpoint of binocular rotation at a specific position in the virtual three-dimensional space;

(iii) creating an original image of the virtual objects within a visual field, the visual field defined as a pyramid whose apex is located at the midpoint of binocular rotation and whose central axis is along a direction of a specific central visual line; and

(iv) deriving, with respect to a plurality of object points, each object point corresponding to a pixel of the original image, an object distance, the object distance being defined as a distance between the object point and the midpoint of binocular rotation;

(b) creating a distorted original image, further comprising steps of:

(i) defining, for viewing an object point, a direction of synkinetic binocular rotation, which is uniquely determined, by both directions of monocular rotation of right and left eyeballs toward the object point;

(ii) deriving a central direction of synkinetic binocular rotation with a ray tracing method so that each of right and left monocular central principal rays pass through a specific position on each spectacle lens, respectively, wherein the central direction of synkinetic binocular rotation is the direction of synkinetic binocular rotation for viewing the object point located at a center of the visual field and the right and left monocular central principal rays are principal rays directed from right and left eyeballs, respectively, toward the central object point;

(iii) deriving, with respect to each object point, a direction of synkinetic binocular rotation for viewing the object point as the position of the object point in an after-lens visual field with a ray tracing method, wherein the after-lens visual field is a visual field whose central axis is along the central direction of synkinetic binocular rotation;

(iv) creating a distorted original image, the distorted original image being defined as an image obtained in the after-lens visual field and having distortion caused by the spectacle lenses; and

(v) deriving, with respect to each object point, both right and left principal ray-passing positions, wherein the principal ray-passing position is a position on the spectacle lens through which a principal ray toward the object point passes;

(c) deriving positions of spectacle frames by creating images of spectacle frame marks that indicate positions of right and left spectacle frames on the original image or on the distorted original image by using data of the principal ray-passing positions obtained in the step of creating a distorted original image;

(d) deriving the binocular performance index, further comprising steps of:

(i) providing an accommodation-dependent ocular optical system for each of the right and left eyes as a model of the ocular optical system;

(ii) calculating, with respect to each object point corresponding to a pixel of the original image or the distorted original image, distances from the object point to the right and left centers of monocular rotation using the object distance obtained in the step of creating an original image;

(iii) setting, with respect to each object point corresponding to a pixel of the original image or the distorted original image, powers of accommodation of right and left eyes to a same value or different values in accordance with each distance from the object point to each center of monocular rotation, and each refractive power of spectacle lens at each principal ray-passing position obtained in the step of creating a distorted original image; and

(iv) deriving, with respect to each object point corresponding to a pixel of the original image or the distorted original image, the binocular performance index of spectacle lenses in a united optical system comprising the spectacle lens and the accommodation-dependent ocular optical system which is rotated in accordance with a direction of monocular rotation; and

(e) creating the binocular performance index image, further comprising steps of:

(i) creating a binocular performance index image by assigning, to each pixel of the original image or the distorted original image, a monocular luminance or a set of luminances of three primary colors of RGB determined in accordance with the value of the binocular performance index of spectacle lenses, and
(ii) overlaying the obtained the binocular performance index image with the frame mark images of spectacle frames created in the step of deriving positions of spectacle frames.

3.  A method for indicating binocular performance of spectacle lenses according to claim 1 or 2, wherein said binocular performance index is defined as a binocular residual corrective error for viewing said object point.

4.  A method for indicating binocular performance of spectacle lenses according to claim 3, wherein said binocular residual corrective error is defined as the residual power or the residual astigmatism derived from the right or the left residual wavefront.

5.  A method for indicating binocular performance of spectacle lenses according to claim 3, wherein said binocular residual corrective error is defined as the residual power or the residual astigmatism derived from an wave front defined as the average of, or the difference between the right and the left residual wavefront.

6.  A method for indicating binocular performance of spectacle lenses according to claim 1, wherein the binocular performance index is defined as the binocular vertical deviation (the vertical deviation between right and left visual lines) which is derived from directions of right and left monocular rotations for viewing said object point.

7.  A method for indicating binocular performance of spectacle lenses according to claim 1, wherein the binocular performance index is defined as a degree of disagreement between the convergence and the accommodation for viewing said object point.

8.  A method for indicating binocular performance of spectacle lenses according to claim 7, wherein the degree of disagreement is defined as the difference between the power of convergence and the power of accommodation.

9.  A method for indicating binocular performance of spectacle lenses according to caim 1, wherein the binocular performance index is defined as a binocular point deformation index expressing a degree of deformation for viewing said object point.

10. A method for indicating binocular performance of spectacle lenses according to claim 9, wherein the binocular point deformation index is derived by determining how the shape of a small circle centered at said object point changes when binocularly viewed through the spectacle lenses, wherein said deformed shape of the small circle is approximated to be an ellipse.

11. A method for indicating binocular performance of spectacle lenses according to claim 10, wherein the binocular point deformation index is defined as the ratio of major axis to minor axis of said ellipse.

12. A method for indicating binocular performance of spectacle lenses according to claim 1, wherein the binocular performance index is defined as an aniseikonic index expressing a degree of optical aniseikonia for viewing said object point.

13. A method for indicating binocular performance of spectacle lenses according to claim 12, wherein the aniseikonic index is derived by determining how a shape of a small circle centered at said object point changes when viewed through the right spectacle lens and the left spectacle lens, each deformed shape of the small circle of right and left eye is approximated to be an ellipse.

14. A method for indicating binocular performance of spectacle lenses according to claim 13, wherein the aniseikonic index is defined as the square root of the ratio of the area of the right point deformed ellipses to the area of the left point deformed ellipse.

15. A method for indicating binocular performance of spectacle lenses according to claim 1, wherein the binocular performance index is defined as a binocular clearness index which expresses a degree of clearness for viewing said object point binocularly.

16. A method for indicating binocular performance of spectacle lenses according to claim 14, wherein the binocular clearness index is derived by determining both monocular point spread functions (PSF) of right and left eye for viewing said object point, approximating each spreading range of right and left PSF to an ellipse, uniting both right and left spreading ellipses into a binocular spreading ellipse, defining the binocular clearness index as the half of a diagonal length of a rectangle that circumscribes binocular spreading ellipse.

17. An apparatus for indicating binocular performance of spectacle lenses when an observer see through right and left spectacle lenses comprising:

(a) means for creating an original image, further comprising:

(i) means for creating virtual objects by using computer graphics and placing the virtual objects in a virtual three-dimensional space;

(ii) means for placing a midpoint of binocular rotation at a specific position in the virtual three-dimensional space;

(iii) means for creating an original image of the virtual objects within a visual field, the visual field defined as a pyramid whose apex is located at the midpoint of binocular rotation and whose central axis is along a direction of a specific central visual line; and

(iv) means for deriving, with respect to a plurality of object points, each object point corresponding to a pixel of the original image, an object distance, the object distance being defined as a distance between the object point and the midpoint of binocular rotation;

(b) means for creating a distorted original image, further comprising:

(i) means for defining, for viewing an object point, a direction of synkinetic binocular rotation, which is uniquely determined, by both directions of monocular rotation of right and left eyeballs toward the object point;

(ii) means for deriving a central direction of synkinetic binocular rotation with a ray tracing method so that each of right and left monocular central principal rays pass through a specific position on each spectacle lens, respectively, wherein the central direction of synkinetic binocular rotation is the direction of synkinetic binocular rotation for viewing the object point located at a center of the visual field and the right and left monocular central principal rays are principal rays directed from right and left eyeballs, respectively, toward the central object point;

(iii) means for deriving, with respect to each object point, a direction of synkinetic binocular rotation for viewing the object point as the position of the object point in an after-lens visual field with a ray tracing method, wherein the after-lens visual field is a visual field whose central axis is along the central direction of synkinetic binocular rotation;

(iv) means for creating a distorted original image, the distorted original image being defined as an image obtained in the after-lens visual field and having distortion caused by the spectacle lenses; and

(v) means for deriving, with respect to each object point, both right and left principal ray-passing positions, wherein the principal ray-passing position is a position on the spectacle lens through which a principal ray toward the object point passes;

(c) means for deriving positions of spectacle frames by creating images of spectacle frame marks that indicate positions of right and left spectacle frames on the original image or on the distorted original image by using data of the principal ray-passing positions obtained in the step of creating a distorted original image;

(d) means for deriving the binocular performance index, further comprising:

(i) means for providing an accommodation-dependent ocular optical system for each of the right and left eyes as a model of the ocular optical system;

(ii) means for calculating, with respect to each object point corresponding to a pixel of the original image or the distorted original image, distances from the object point to the right and left centers of monocular rotation using the object distance obtained in the step of creating an original image;

(iii) means for setting, with respect to each object point corresponding to a pixel of the original image or the distorted original image, powers of accommodation of right and left eyes to a same value or different values in accordance with each distance from the object point to each center of monocular rotation, and each refractive power of spectacle lens at each principal ray-passing position obtained in the step of creating a distorted original image; and

(iv) means for deriving, with respect to each object point corresponding to a pixel of the original image or the distorted original image, the binocular performance index of spectacle lenses in a united optical system comprising the spectacle lens and the accommodation-dependent ocular optical system which is rotated in accordance with a direction of monocular rotation; and

(e) means for creating the binocular performance index image, further comprising:

(i) means for creating a binocular performance index image by assigning, to each pixel of the original image or the distorted original image, a monocular luminance or luminances of three primary colors of RGB determined in accordance with the value of the binocular performance index of spectacle lenses, and

(ii) means for overlaying the obtained the binocular performance index image with the frame mark images of spectacle frames created in the step of deriving positions of spectacle frames.

**18.** An apparatus for indicating binocular performance of spectacle lenses according to claim 17, comprising:

means for creating virtual objects by using computer graphics and placing them in a virtual three-dimensional space;
means for creating a story of changes with time of the positions of eyes, the direction of a central visual line, the ray-passing positions in the right and left lenses and the amount of deformation and displacement of the virtual objects;
means for creating a binocular performance index image of spectacle lenses at each point of time by means according to claim 16; and
means for editing binocular performance index images at all point of time into a video movie.

**Patentansprüche**

**1.** Verfahren zum Anzeigen der binokularen Leistung von Brillengläsern beim Betrachten eines Gesichtsfelds durch rechte und linke Brillengläser hindurch, welches die folgenden Schritte umfaßt:

Definieren eines binokularen Leistungsindex, um die binokulare Leistung von Brillengläsern bei der Betrachtung eines Objektpunkts in einem Gesichtsfeld auszudrücken, und

Ableiten von binokularen Leistungsindizes für eine Vielzahl von Objektpunkten, die über das Gesichtsfeld verteilt sind, wobei jeder Objektpunkt einem Pixel des Bildes entspricht, welches das Gesichtsfeld ausfüllt,

Erzeugen eines binokularen Leistungsindexbildes, welches das Gesichtsfeld ausfüllt, worin die monochromatische oder RGB-Farbluminosität jedes Pixels so bestimmt ist, daß sie den Wert des binokularen Leistungsindex beim Betrachten des entsprechenden Objektpunkts anzeigt,

Anzeigen der Skala der erhaltenen binokularen Leistungsindizes auf visuell verständliche Weise,

wobei der Schritt des Erzeugens eines binokularen Leistungsindex ferner die folgenden Schritte umfaßt:

Erzeugen eines Originalbildes, was den Schritt des Positionierens des Mittelpunkts der binokularen Drehung an einer bestimmten Stelle einschließt, wobei der Mittelpunkt der binokularen Drehung der Mittelpunkt zwischen den Zentren der monokularen Drehung des rechten und des linken Auges ist, sowie den Schritt des

Erzeugens eines Bildes in einem Gesichtsfeld, das als spezifisches pyramidales Feld definiert ist, dessen Scheitel mit dem Mittelpunkt der binokularen Drehung zusammenfällt, als Originalbild;

Erzeugen eines verzerrten Originalbildes anhand der Strahlverfolgungsmethode, wobei es sich bei dem verzerrten Originalbild um ein Bild handelt, dessen Verzerrung durch Betrachten von Objektpunkten im Gesichtsfeld durch die Brillengläser hindurch zustande kommt;

Ableiten der Positionen von Brillenrahmen durch Erzeugen von Abbildungen von Brillenrahmenmarkierungen, die Positionen auf dem rechten und linken Brillenrahmen anzeigen, unter Verwendung der Daten der Hauptstrahl-Durchgangspositionen, die im Schritt des Erzeugens eines verzerrten Originalbildes erhalten wurden;

Ableiten von binokularen Leistungsindizes mit Bezug auf die Vielzahl von Objektpunkten, wobei jeder Objektpunkt einem Pixel des Originalbildes oder des verzerrten Originalbildes entspricht, die oben erzeugt wurden, in einem optischen System, welches die Brillengläser und ein Okularmodell einschließt;

Erzeugen von virtuellen Objekten unter Verwendung von Computergrafiken und deren Anordnen in einem virtuellen dreidimensionalen Raum;

Erzeugen einer zeitabhängigen Änderungsverlaufsaufzeichnung der Augenpositionen, der Richtung der zentralen Gesichtslinie, der Strahl-Durchgangspositionen im rechten und linken Brillenglas und des Maßes der Deformierung und Verzerrung der virtuellen Objekte;

Erzeugen eines binokularen Leistungsindexbildes von Brillengläsern zu jedem Zeitpunkt durch Zuordnen der monokularen Luminanz oder der Luminanzen von drei RGB-Primärfarben, die entsprechend dem Wert des binokularen Leistungsindex bestimmt werden, der im Schritt des Ableitens des binokularen Leistungsindex abgeleitet wurde, zu jedem Pixel des Originalbildes oder des verzerrten Originalbildes und Überlagern des binokularen Leistungsindexbildes mit den Rahmenmarkierungsbildern von Brillenrahmen, die im Schritt des Ableitens der Positionen von Brillenrahmen erhalten wurden; und

Ausgeben von binokularen Leistungsindexbildern für jeden Zeitpunkt in einem Videofilm.

**2.** Verfahren zum Anzeigen der binokularen Leistung von Brillengläsern nach Anspruch 1, wobei der Schritt des Erzeugens eines binokularen Leistungsindexbildes ferner die folgenden Schritte umfaßt:

(a) Erzeugen eines Originalbildes, was ferner die folgenden Schritte umfaßt:

(i) Erzeugen eines virtuellen Objekts unter Verwendung von Computergrafiken und Anordnen des virtuellen Objekts in einem dreidimensionalen Raum;

(ii) Anordnen des Mittelpunkts der binokularen Drehung an einer bestimmten Stelle im virtuellen dreidimensionalen Raum;

(iii) Erzeugen eines Originalbildes des virtuellen Objekts in einem Gesichtsfeld, wobei das Gesichtsfeld definiert ist als Pyramide, deren Scheitel am Mittelpunkt der binokularen Drehung angeordnet ist und deren zentrale Achse entlang einer bestimmten zentralen Gesichtslinie verläuft; und

(iv) Ableiten einer Objektdistanz mit Bezug auf eine Vielzahl von Objektpunkten, wobei jeder Objektpunkt einem Pixel des Originalbildes entspricht, und wobei der Objektabstand als Abstand zwischen dem Objektpunkt und dem Mittelpunkt der binokularen Drehung definiert ist;

(b) Erzeugen eines verzerrten Originalbildes, was ferner die folgenden Schritte umfaßt:

(i) Definieren der Richtung der synkinetischen binokularen Drehung beim Betrachten eines Objektpunkts, wobei diese durch beide Richtungen der monokularen Drehung des rechten und des linken Augapfels zum Objektpunkt eindeutig definiert ist;

(ii) Ableiten der zentralen Richtung der synkinetischen binokularen Drehung anhand der Strahlverfolgungsmethode, so daß sowohl der rechte als auch der linke monokulare zentrale Hauptstrahl durch eine bestimmte Stelle auf jedem Brillenglas tritt, wobei die zentrale Richtung der synkinetischen binokularen Drehung die Richtung der synkinetischen binokularen Drehung beim Betrachten des Objektpunkts ist, der im Mittelpunkt des Gesichtsfelds liegt, und die rechten und linken monokularen Hauptstrahlen Hauptstahlen sind, die vom rechten bzw. vom linken Augapfel in Richtung des zentralen Objektpunkts ausgehen;

(iii) Ableiten der Richtung der synkinetischen binokularen Drehung beim Betrachten eines Objektpunkts als Position des Objektpunkts im Gesichtsfeld hinter dem Brillenglas anhand der Strahlverfolgungsmethode, und zwar mit Bezug auf jeden Objektpunkt, wobei das Gesichtsfeld hinter dem Brillenglas das Gesichtsfeld ist, dessen Mittelachse in der zentralen Richtung der synkinetischen binokularen Drehung verläuft;

(iv) Erzeugen eines verzerrten Originalbildes, wobei das verzerrte Originalbild als Bild definiert ist, das im Gesichtsfeld hinter dem Brillenglas erzeugt wird und dessen Verzerrung von den Brillengläsern verursacht wird; und

(v) Ableiten von sowohl rechten als auch linken Hauptstrahl-Durchgangspositionen mit Bezug auf jeden Objektpunkt, wobei die Hauptstrahl-Durchgangsposition die Position auf dem Brillenglas ist, durch die ein Hauptstrahl zum Objektpunkt verläuft;

(c) Ableiten von Positionen der Brillenrahmen durch Erzeugen von Bildern von Brillenrahmenmarkierungen, die die Positionen der rechten und linken Brillenrahmen anzeigen, auf dem Originalbild oder auf dem verzerrten Originalbild unter Verwendung von Daten der Hauptstrahl-Durchgangspositionen, die im Schritt des Erzeugens eines verzerrten Originalbildes erhalten wurden;

(d) Ableiten des binokularen Leistungsindex, was ferner die folgenden Schritte umfaßt:

(i) Bereitstellen eines akkomodationsabhängigen okularen optischen Systems für sowohl das rechte als auch das linke Auge als Modell des okularen optischen Systems;

(ii) Berechnen der Abstände vom Objektpunkt zu den rechten und linken Zentren der monokularen Drehung mit Bezug auf jeden Objektpunkt, der einem Pixel des Originalbildes oder des verzerrten Originalbildes entspricht, unter Verwendung der Objektabstände, die im Schritt des Erzeugens eines Originalbildes erhalten wurden;

(iii) Festsetzen der Akkomodationsleistungen des rechten und des linken Auges mit Bezug auf jeden Objektpunkt, der einem Pixel des Originalbildes oder des verzerrten Originalbildes entspricht, auf den gleichen Wert oder auf verschiedene Werte entsprechend dem Abstand jedes Objektpunkts zu jedem Zentrum der binokularen Drehung und jeder Refraktionsleistung des Brillenglases an jeder Hauptstrahl-Durchgangsposition, die im Schritt des Erzeugens eines verzerrten Originalbildes erhalten wurden; und

(iv) Ableiten des binokularen Leistungsindex von Brillengläsern in einem vereinigten optischen System, welches das Brillenglas und das akkomodationsabhängige okulare optische System einschließt, das entsprechend der Richtung der monokularen Drehung gedreht wird, mit Bezug auf jeden Objektpunkt, der einem Pixel des Originalbildes oder des verzerrten Originalbildes entspricht; und

(e) Erzeugen des binokularen Leistungsindexbildes, was ferner die folgenden Schritte umfaßt:

(i) Erzeugen eines binokularen Leistungsindexbildes durch Zuordnen der monokularen Luminanz oder eines Luminanzsatzes für drei RGB-Primärfarben, die entsprechend dem Wert des binokularen Leistungsindex von Brillengläsern bestimmt wurden, zu jedem Pixel im Originalbild oder im verzerrten Originalbild; und

(ii) Überlagern des erhaltenen binokularen Leistungsindexbildes mit den Rahmenmarkierungsbildern für Brillenrahmen, die im Schritt des Ableitens von Positionen der Brillenrahmen erhalten wurden.

3.  Verfahren zum Anzeigen der binokularen Leistung von Brillengläsern nach Anspruch 1 oder 2, wobei der binokulare Leistungsindex definiert ist als binokularer Rest-Korrekturfehler beim Betrachten des Objektpunkts.

4.  Verfahren zum Anzeigen der binokularen Leistung von Brillengläsern nach Anspruch 3, wobei der binokulare Rest-Korrekturfehler definiert ist als sphärischer Restfehler oder als Rest-Astigmatismus, der von der rechten oder linken Rest-Wellenfront abgeleitet ist.

5.  Verfahren zum Anzeigen der binokularen Leistung von Brillengläsern nach Anspruch 3, wobei der binokulare Rest-Korrekturfehler definiert ist als sphärischer Restfehler oder als Rest-Astigmatismus, der von einer Wellenfront abgeleitet ist, die als Durchschnitt oder Differenz der rechten und linken Wellenfronten definiert ist.

6. Verfahren zum Anzeigen der binokularen Leistung von Brillengläsern nach Anspruch 1, wobei der binokulare Leistungsindex definiert ist als die binokulare vertikale Abweichung (die vertikale Abweichung zwischen rechten und linken Gesichtslinien), die abgeleitet ist von den Richtungen der rechten und linken monokularen Drehungen beim Betrachten des Objektpunkts.

7. Verfahren zum Anzeigen der binokularen Leistung von Brillengläsern nach Anspruch 1, wobei der binokulare Leistungsindex definiert ist als Grad der Nicht-Übereinstimmung zwischen der Konvergenz und der Akkommodierung beim Betrachten des Objektpunkts.

8. Verfahren zum Anzeigen der binokularen Leistung von Brillengläsern nach Anspruch 7, wobei der Grad der Nicht-Übereinstimmung definiert ist als Differenz zwischen der Konvergenzleistung und der Akkomodationsleistung.

9. Verfahren zum Anzeigen der binokularen Leistung von Brillengläsern nach Anspruch 1, wobei der binokulare Leistungsindex definiert ist als binokularer Punktdeformationsindex, der den Grad der Deformation beim Betrachten des Objektpunkts anzeigt.

10. Verfahren zum Anzeigen der binokularen Leistung von Brillengläsern nach Anspruch 9, wobei der binokulare Punktdeformationsindex abgeleitet wird durch Bestimmen, wie die Form eines kleinen Kreises, dessen Mittelpunkt mit dem Objektpunkt zusammenfällt, sich ändert, wenn er beidäugig durch die Brillengläser hindurch betrachtet wird, wobei die deformierte Form des kleinen Kreises ungefähr eine Ellipse ist.

11. Verfahren zum Anzeigen der binokularen Leistung von Brillengläsern nach Anspruch 10, wobei der binokulare Punktdeformationsindex definiert ist als Verhältnis der Hauptachse zur Nebenachse der Ellipse.

12. Verfahren zum Anzeigen der binokularen Leistung von Brillengläsern nach Anspruch 1, wobei der binokulare Leistungsindex definiert ist als aniseikonischer Index, der den Grad der optischen Aniseikonie beim Betrachten des Objektpunkts ausdrückt.

13. Verfahren zum Anzeigen der binokularen Leistung von Brillengläsern nach Anspruch 12, wobei der aniseikonische Index abgeleitet wird durch Bestimmen, wie die Form eines kleinen Kreises, dessen Mittelpunkt mit dem Objektpunkt zusammenfällt, sich ändert, wenn er durch das rechte Brillenglas und das linke Brillenglas hindurch betrachtet wird, wobei die deformierte Form des kleinen Kreises beim rechten und beim linken Auges jeweils etwa eine Ellipse ist.

14. Verfahren zum Anzeigen der binokularen Leistung von Brillengläsern nach Anspruch 13, wobei der aniseikonische Index definiert ist als Quadratwurzel des Verhältnisses der Fläche der deformierten Ellipse am rechten Punkt und der Fläche der deformierten Ellipse am linken Punkt.

15. Verfahren zum Anzeigen der binokularen Leistung von Brillengläsern nach Anspruch 1, wobei der binokulare Leistungsindex definiert ist als binokularer Klarheitsindex, der den Grad der Klarheit beim beidäugigen Betrachten des Objektpunkts ausdrückt.

16. Verfahren zum Anzeigen der binokularen Leistung von Brillengläsern nach Anspruch 14, wobei der binokulare Klarheitsindex abgeleitet wird durch Bestimmung beider monokularer Punktverwaschungsfunktionen (*point spread function ,* PSF) des rechten und des linken Auges beim Betrachten des Objektpunkts, Näherung der jeweiligen Verwaschungsbereiche der rechten und der linken PSF zu einer Ellipse, Vereinigung sowohl der rechten als auch der linken Verwaschungsellipse zu einer binokularen Verwaschungsellipse, Definieren des binokularen Klarheitsindex als die halbe Länge eines Rechtecks, das die binokulare Verwaschungsellipse umschreibt.

17. Vorrichtung zum Anzeigen der binokularen Leistung von Brillengläsern, wenn ein Betrachter durch rechte und linke Brillengläser blickt, welches einschließt:

(a) Mittel zum Erzeugen eines Originalbildes, was ferner einschließt:

(i) Mittel zum Erzeugen von virtuellen Objekten unter Verwendung von Computergraphiken und Anordnen in einem dreidimensionalen virtuellen Raum;

(ii) Mittel zum Anordnen eines Mittelpunkts der binokularen Drehung an einer bestimmten Position im virtuellen dreidimensionalen Raum;

(iii) Mittel zum Erzeugen eines Originalbildes des virtuellen Objekts in einem visuellen Feld, wobei das visuelle Feld definiert ist als Pyramide, deren Scheitelpunkt mit dem Mittelpunkt der binokularen Drehung zusammenfällt und deren Mittelachse in Richtung einer spezifischen Gesichtslinie verläuft; und

(iv) Mittel zum Ableiten des Objektabstands, wobei der Objektabstand als Abstand zwischen dem Objektpunkt und dem Mittelpunkt der binokularen Drehung definiert ist, mit Bezug auf jeden aus einer Vielzahl von Objektpunkten, wobei jeder Objektpunkt einem Pixel des Originalbildes entspricht,;

(b) Mittel zum Erzeugen eines verzerrten Originalbildes, was ferner einschließt:

(i) Mittel zum Definieren der Richtung der synkinetischen binokularen Drehung beim Betrachten eines Objektpunktes, wobei diese eindeutig durch beide Richtungen der monokularen Drehung des rechten und des linken Augapfels zum Objektpunkt hin definiert ist;

(ii) Mittel zum Ableiten der zentralen Richtung der synkinetischen binokularen Drehung mit einem Strahlverfolgungsverfahren, so daß sowohl der rechte als auch der linke monokulare mittlere Hauptstrahl durch eine bestimmte Stelle jedes Brillenglases hindurchtreten, wobei die zentrale Richtung der synkinetischen binokularen Drehung die Richtung der synkinetischen binokularen Drehung beim Betrachten des Objektpunkts ist, der im Zentrum des Gesichtsfelds angeordnet ist, und die rechten und linken monokularen zentralen Hauptstrahlen Hauptstrahlen sind, die vom rechten bzw. linken Augapfel zum zentralen Objektpunkt hin ausgerichtet sind;

(iii) Mittel zum Ableiten der Richtung der synkinetischen binokularen Drehung beim Betrachten eines Objektpunkts als Position des Objektpunkts in einem hinter dem Brillenglas gelegenen Gesichtsfeld mit einem Strahlverfolgungsverfahren, und zwar in Bezug auf jeden Objektpunkt, wobei das hinter dem Brillenglas liegende Gesichtsfeld ein Gesichtsfeld ist, dessen zentrale Achse entlang der zentralen Richtung der synkinetischen binokularen Drehung verläuft;

(iv) Mittel zum Erzeugen eines verzerrten Originalbildes, wobei das verzerrte Originalbild definiert ist als ein Bild, das im hinter dem Brillenglas gelegenen Gesichtsfeld erhalten wird und das aufgrund der Brillengläser eine Verzerrung aufweist; und

(v) Mittel zum Ableiten der Positionen von sowohl dem rechten als auch dem linken Hauptstrahldurchgang, wobei die Hauptstrahl-Durchgangsposition eine Position auf dem Brillenglas ist, an der ein Hauptstrahl in Richtung auf den Objektpunkt durchtritt;

(c) Mittel zum Ableiten der Positionen von Brillenrahmen durch Erzeugen von Bildern von Brillenrahmenmarkierungen, die die Positionen der rechten und linken Brillenrahmen auf dem Originalbild oder auf dem verzerrten Originalbild unter Verwendung von Daten über die Hautpstrahl-Durchgangspositionen anzeigen, welche im Schritt des Erzeugens eines verzerrten Originalbildes erhalten wurden;

(d) Mittel zum Ableiten des binokularen Leistungsindex, welche ferner umfassen:

(i) Mittel zum Bereitstellen eines akkomodationsabhängigen okularen optischen Systems für sowohl das rechte als auch das linke Auge als Modell für das okulare optische System;

(ii) Mittel zum Berechnen der Abstände vom Objektpunkt zum rechten und zum linken Zentrum der monokularen Drehung unter Verwendung des im Schritt des Erzeugens eines Originalbildes erhaltenen Objektabstands, und zwar für jeden Objektpunkt, der einem Pixel des Originalbildes oder des verzerrten Originalbildes entspricht;

(iii) Mittel zum Festsetzen der Akkomodationsleistung des rechten und des linken Auges auf den gleichen Wert oder auf unterschiedliche Werte entsprechend dem jeweiligen Abstand vom Objektpunkt zum Mittelpunkt der monokularen Drehung und der jeweiligen Brechungsleistung des Brillenglases an jeder Hauptstahl-Durchgangsposition, die im Schritt des Erzeugens eines verzerrten Originalbildes erhalten wurden, und zwar für jeden Objektpunkt, der einem Pixel des Originalbildes oder des verzerrten Originalbildes entspricht; und

(iv) Mittel zum Ableiten des binokularen Leistungsindex von Brillengläsern in einem vereinigten optischen System, das die Brillengläser und das akkomodationsabhängige okulare optische System einschließt, das entsprechend der Richtung der monokularen Drehung gedreht wird, und zwar in Bezug auf jeden Objektpunkt, der einem Pixel des Originalbildes oder des verzerrten Originalbildes entspricht; und

(e) Mittel zum Erzeugen des binokularen Leistungsindexbildes, was ferner einschließt:

(i) Mittel zum Erzeugen eines binokularen Leistungsindexbildes durch Zuordnen der monokularen Luminanz oder der Luminanzen von drei PGB-Primärfarben entsprechend des Werts der binokularen Leistung des Brillengläser zu jedem Pixel des Originalbildes oder des verzerrten Originalbildes; und

(ii) Mittel zum Überlagern des erhaltenen binokularen Leistungsindexbildes mit den Rahmenmarkierungsbildern von Brillengläsern, die im Schritt des Ableitens von Positionen der Brillenrahmen erhalten wurden.

**18.** Vorrichtung zum Anzeigen der binokularen Leistung von Brillengläsern nach Anspruch 17, welche einschließt:

Mittel zum Erzeugen einer zeitabhängigen Änderungsaufzeichnung der Augenstellungen, der Richtung einer zentralen Gesichtslinie, der Strahl-Durchgangspositionen im rechten und im linken Brillenglas und des Ausmaßes der Deformation und Verschiebung des virtuellen Objekts;

Mittel zum Erzeugen eines binokularen Leistungsindexbildes von Brillengläsern zu jedem Zeitpunkt durch Mittel nach Anspruch 16; und

Mittel zum Ausgeben von binokularen Leistungsindexbildem zu allen Zeitpunkten in einem Videofilm.

## Revendications

**1.** Procédé d'indication de la performance binoculaire de verres de lunettes lorsqu'un champ visuel est vu par un observateur à travers des verres de lunettes droite et gauche comprenant les étapes consistant à :

définir un indice de performance binoculaire qui exprime la performance binoculaire des verres de lunettes pour visionner un point objet dans un champ visuel, et
dériver des indices de performance binoculaire pour une pluralité de points objets distribués sur ledit champ visuel, chaque point objet correspondant à un pixel d'une image qui couvre ledit champ visuel,
créer une image d'indice de performance binoculaire qui couvre ledit champ visuel, dans laquelle la luminosité monochromatique ou de couleur RVB de chaque pixel est attribuée pour indiquer la valeur de l'indice de performance binoculaire pour visionner le point objet correspondant,
afficher l'échelle des indices de performance binoculaire obtenus dans un mode visuellement compréhensible,

dans lequel ladite étape de création d'une image d'indice de performance binoculaire comprend en outre les étapes consistant à :

créer une image d'origine comprenant l'étape consistant à placer un point médian de rotation binoculaire à une position spécifique, le point médian de rotation binoculaire étant un point médian entre des centres de rotation monoculaire des yeux droit et gauche, et l'étape consistant à créer, en tant qu'image d'origine, une image dans un champ visuel défini comme champ pyramidal spécifique ayant un sommet au niveau du point médian de rotation binoculaire ;
créer une image d'origine ayant subi une distorsion par un procédé de lancer de rayon, dans lequel l'image d'origine ayant subi une distorsion est une image ayant subi une distorsion obtenue en observant des points objets dans le champ visuel à travers les verres de lunettes ;
dériver des positions de montures de lunettes en créant des images de marques de montures de lunettes qui indiquent des positions de montures de lunettes droite et gauche sur l'image d'origine ou sur l'image d'origine ayant subi une distorsion en utilisant des données des positions principales de passage de rayon obtenues dans l'étape de création d'une image d'origine ayant subi une distorsion ;

dériver des indices de performance binoculaire par rapport à la pluralité de points objets, chaque point objet correspondant à un pixel de l'image d'origine ou à l'image d'origine ayant subi une distorsion créée ci-dessus, dans un système optique comprenant les verres de lunettes et un modèle oculaire ;

créer des objets virtuels en utilisant l'infographie et en les plaçant dans un espace tridimensionnel virtuel ;

créer une histoire de changement avec le temps des positions des yeux, de la direction d'une ligne visuelle centrale, des positions de passage de rayon dans les verres droit et gauche et de la quantité de déformation et de déplacement des objets virtuels ;

créer une image d'indice de performance binoculaire des verres de lunettes à chaque instant en attribuant, à chaque pixel de ladite image d'origine ou de ladite image d'origine ayant subi une distorsion, une luminance ou des luminances monoculaire(s) des trois couleurs primaires de RVB déterminées selon la valeur de l'indice de performance binoculaire dérivée dans l'étape de dérivation d'un indice de performance binoculaire, et recouvrir l'image d'indice de performance binoculaire des images de marque de monture des montures de lunettes créées dans l'étape de dérivation de positions de montures de lunettes ; et

éditer les images d'indice de performance binoculaire à tout instant dans une animation vidéo.

2. Procédé d'indication de la performance binoculaire de verres de lunettes selon la revendication 1, dans lequel l'étape de création d'une image d'indice de performance binoculaire comprend en outre les étapes consistant à :

(a) créer une image d'origine, comprenant en outre les étapes consistant à :

(i) créer des objets virtuels en utilisant l'infographie et en plaçant les objets virtuels dans un espace tridimensionnel virtuel ;

(ii) placer un point médian de rotation binoculaire à une position spécifique dans l'espace tridimensionnel virtuel ;

(iii) créer une image d'origine des objets virtuels dans un champ visuel, le champ visuel défini comme une pyramide dont le sommet est situé au point médian de rotation binoculaire et dont l'axe central se situe le long d'une direction d'une ligne visuelle centrale spécifique ;

(iv) dériver, par rapport à une pluralité de points objets, chaque point objet correspondant à un pixel de l'image d'origine, une distance objet, la distance objet étant définie comme distance entre le point objet et le point médian de rotation binoculaire ;

(b) créer une image d'origine ayant subi une distorsion, comprenant en outre les étapes consistant à :

(i) définir, pour visionner un point objet, une direction de rotation binoculaire syncinétique qui est déterminée de manière unique, par les deux directions de rotation monoculaire des globes oculaires droit et gauche vers le point objet ;

(ii) dériver une direction centrale de rotation binoculaire syncinétique avec un procédé de lancer de rayon de sorte que chacun des rayons principaux centraux monoculaires droit et gauche passent à travers une position spécifique sur chaque verre de lunettes, respectivement, dans lequel la direction centrale de rotation binoculaire syncinétique est la direction de rotation binoculaire syncinétique pour visionner le point objet situé au centre du champ visuel et les rayons principaux centraux monoculaires droit et gauche sont des rayons principaux dirigés à partir des globes oculaires droit et gauche, respectivement, vers le point objet central ;

(iii) dériver, par rapport à chaque point objet, une direction de rotation binoculaire syncinétique pour visionner le point objet en tant que position du point objet dans un champ visuel après-verre avec un procédé de lancer de rayon, dans lequel le champ visuel après-verre est un champ visuel dont l'axe central se situe le long de la direction centrale de rotation binoculaire syncinétique ;

(iv) créer une image d'origine ayant subi une distorsion, l'image d'origine ayant subi une distorsion étant définie comme une image obtenue dans le champ visuel après-verre et ayant une distorsion induite par les verres de lunettes ; et

(v) dériver, par rapport à chaque point objet, les positions principales de passage de rayon tant droite que gauche, dans lequel la position principale de passage de rayon est une position du verre de lunettes à travers lequel un rayon principal passe vers le point objet ;

(c) dériver des positions de montures de lunettes en créant les images de marque de montures de lunettes qui indiquent des positions des montures de lunettes droite et gauche sur l'image d'origine ou sur l'image d'origine ayant subi une distorsion en utilisant des données des positions principales de passage de rayon obtenues dans l'étape de création d'une image d'origine ayant subi une distorsion ;

(d) dériver l'indice de performance binoculaire, comprenant en outre les étapes consistant à :

(i) fournir un système optique oculaire dépendant de l'accommodation pour chacun des yeux droit et gauche comme modèle du système optique oculaire ;

(ii) calculer, par rapport à chaque point objet correspondant à un pixel de l'image d'origine ou de l'image d'origine ayant subi une distorsion, des distances allant du point objet aux centres droit et gauche de rotation monoculaire en utilisant la distance objet obtenue dans l'étape de création d'une image d'origine ;

(iii) établir, par rapport à chaque point objet correspondant à un pixel de l'image d'origine ou de l'image d'origine ayant subi une distorsion, des pouvoirs d'accommodation des yeux droit et gauche à une même valeur ou à des valeurs différentes selon chaque distance allant du point objet à chaque centre de rotation monoculaire, et chaque pouvoir dioptrique de verre de lunettes à chaque position principale de passage de rayon obtenue dans l'étape de création d'une image d'origine ayant subi une distorsion ; et

(iv) dériver, par rapport à chaque point objet correspondant à un pixel de l'image d'origine ou de l'image d'origine ayant subie une distorsion, l'indice de performance binoculaire de verres de lunettes dans un système optique uni comprenant le verre de lunettes et le système optique oculaire dépendant de l'accommodation qui est mis en rotation selon une direction de rotation monoculaire ; et

(e) créer l'image d'indice de performance binoculaire, comprenant en outre les étapes consistant à :

(i) créer une image d'indice de performance binoculaire en attribuant, à chaque pixel de l'image d'origine ou de l'image d'origine ayant subi une distorsion, une luminance monoculaire ou un ensemble de luminances de trois couleurs primaires de RVB déterminées selon la valeur de l'indice de performance binoculaire des verres de lunettes, et

(ii) recouvrir l'image d'indice de performance binoculaire obtenu des images de marque de monture des montures de lunettes créées dans l'étape de dérivation des positions des montures de lunettes.

3. Procédé d'indication de la performance binoculaire de verres de lunettes selon la revendication 1 ou 2, dans lequel l'indice de performance binoculaire est défini comme une erreur corrective résiduelle binoculaire pour visionner ledit point objet.

4. Procédé d'indication de la performance binoculaire de verres de lunettes selon la revendication 3, dans lequel ladite erreur corrective résiduelle binoculaire est définie comme le pouvoir résiduel ou l'astigmatisme résiduel dérivé du front d'onde résiduel droit ou gauche.

5. Procédé d'indication de la performance binoculaire de verres de lunettes selon la revendication 3, dans lequel l'erreur corrective résiduelle binoculaire est définie comme le pouvoir résiduel ou l'astigmatisme résiduel dérivé d'un front d'onde défini comme la moyenne de, ou la différence entre, le front d'onde résiduel droit ou gauche.

6. Procédé d'indication de la performance binoculaire de verres de lunettes selon la revendication 1, dans lequel l'indice de performance binoculaire est défini comme la déviation verticale binoculaire (la déviation verticale entre les lignes visuelles droite et gauche) qui est dérivée de directions de rotation monoculaire droite et gauche pour visionner ledit point objet.

7. Procédé d'indication de la performance binoculaire de verres de lunettes selon la revendication 1, dans lequel l'indice de performance binoculaire est défini comme un degré de désaccord entre la convergence et l'accommodation pour visionner ledit point objet.

8. Procédé d'indication de la performance binoculaire de verres de lunettes selon la revendication 7, dans lequel le degré de désaccord est défini comme la différence entre le pouvoir de convergence et le pouvoir d'accommodation.

9. Procédé d'indication de la performance binoculaire de verres de lunettes selon la revendication 1, dans lequel l'indice de performance binoculaire est défini comme un indice de déformation de point binoculaire exprimant un degré de déformation pour visionner ledit point objet.

10. Procédé d'indication de la performance binoculaire de verres de lunettes selon la revendication 9, dans lequel l'indice de déformation de point binoculaire est dérivé en déterminant la manière avec laquelle la forme d'un petit cercle centré au niveau dudit point objet change lorsqu'il est visionné binoculairement à travers les verres de lunettes, dans lequel ladite forme déformée du petit cercle est approximée comme étant une ellipse.

11. Procédé d'indication de la performance binoculaire de verres de lunettes selon la revendication 10, dans lequel l'indice de déformation de point binoculaire est défini comme le rapport du grand axe sur le petit axe de ladite ellipse.

12. Procédé d'indication de la performance binoculaire de verres de lunettes selon la revendication 1, dans lequel l'indice de performance binoculaire est défini comme un indice aniséïconique exprimant un degré d'aniséïconie optique pour visionner ledit point objet.

13. Procédé d'indication de la performance binoculaire de verres de lunettes selon la revendication 12, dans lequel l'indice d'aniséïconie est dérivé en déterminant la manière avec laquelle une forme d'un petit cercle centré au niveau dudit point objet change lorsqu'il est visionné à travers le verre de lunettes droit et le verre de lunettes gauche, chaque forme déformée du petit cercle de l'oeil droit et gauche étant approximée comme étant une ellipse.

14. Procédé d'indication de la performance binoculaire de verres de lunettes selon la revendication 13, dans lequel l'indice d'aniséïconie est défini comme la racine carrée du rapport de l'aire d'ellipse déformée de point droit sur l'aire de l'ellipse déformée de point gauche.

15. Procédé d'indication de la performance binoculaire de verres de lunettes selon la revendication 1, dans lequel l'indice de performance binoculaire est défini comme un indice de netteté qui exprime un degré de netteté pour visionner ledit point objet binoculairement.

16. Procédé d'indication de la performance binoculaire de verres de lunettes selon la revendication 14, dans lequel l'indice de netteté binoculaire est dérivé en déterminant les deux fonctions de répartition ponctuelle monoculaire (PSF) de l'oeil droit et gauche pour visionner ledit point objet, en approximant chaque gamme de répartition de PSF droit et gauche en une ellipse, en unissant les ellipses de répartition à la fois droite et gauche en une ellipse de répartition binoculaire, et en définissant l'indice de netteté binoculaire comme la moitié d'une longueur diagonale d'un rectangle qui circonscrit l'ellipse de répartition binoculaire.

17. Appareil d'indication de la performance binoculaire de verres de lunettes lorsqu'un observateur regarde à travers les verres de lunettes droit et gauche comprenant :

(a) des moyens destinés à créer une image d'origine, comprenant en outre :

(i) des moyens destinés à créer des objets virtuels en utilisant l'infographie et en plaçant les objets virtuels dans un espace tridimensionnel virtuel ;
(ii) des moyens destinés à placer un point médian de rotation binoculaire en une position spécifique dans l'espace tridimensionnel virtuel ;
(iii) des moyens destinés à créer une image d'origine des objets virtuels dans un champ visuel, le champ visuel étant défini comme une pyramide dont le sommet est situé au niveau du point médian de rotation binoculaire et dont l'axe central se situe le long d'une direction d'une ligne visuelle centrale spécifique ; et
(iv) des moyens destinés à dériver, par rapport à une pluralité de points objets, chaque point objet correspondant à un pixel de l'image d'origine, une distance objet, la distance objet étant définie comme une distance entre le point objet et le point médian de rotation binoculaire ;

(b) des moyens destinés à créer une image d'origine ayant subi une distorsion, comprenant en outre :

(i) des moyens destinés à définir, pour visionner un point objet, une direction de rotation binoculaire syncinétique, qui est déterminée de manière unique, par les deux directions de rotation monoculaire des globes oculaires droit et gauche vers le point objet ;
(ii) des moyens destinés à dériver une direction centrale de rotation binoculaire syncinétique avec un procédé de lancer de rayon de sorte que chacun des rayons principaux centraux monoculaires droit et gauche passe à travers une position spécifique sur chaque verre de lunettes, respectivement, dans lequel la direction centrale de rotation binoculaire syncinétique est la direction de rotation binoculaire syncinétique pour visionner le point objet situé en un centre du champ visuel et les rayons principaux centraux monoculaires droit et gauche sont des rayons principaux dirigés à partir des globes oculaires droit et gauche, respectivement, vers le point objet central ;

(iii) des moyens destinés à dériver, par rapport à chaque point objet, une direction de rotation binoculaire syncinétique pour visionner le point objet comme position du point objet dans un champ visuel après-verre avec un procédé de lancer de rayon, dans lequel le champ visuel après-verre est un champ visuel dont l'axe central se situe le long de la direction centrale de rotation binoculaire syncinétique ;

(iv) des moyens destinés à créer une image d'origine ayant subi une distorsion, l'image d'origine ayant subi une distorsion étant définie comme une image obtenue dans le champ visuel après-verre et ayant une distorsion induite par les verres de lunettes ; et

(v) des moyens destinés à dériver, par rapport à chaque point objet, les deux positions principales de passage de rayons droite et gauche, dans lequel la position principale de passage de rayons est une position sur le verre de lunette à travers laquelle un rayon principal passe vers le point objet ;

(c) des moyens destinés à dériver des positions de montures de lunettes en créant des images de marque de montures de lunettes qui indiquent des positions de montures de lunettes droite et gauche sur l'image d'origine ou sur l'image d'origine ayant subi une distorsion ou en utilisant des données des positions principales de passage de rayons obtenues dans l'étape de création d'une image d'origine ayant subi une distorsion ;

(d) des moyens destinés à dériver l'indice de performance binoculaire, comprenant en outre :

(i) des moyens destinés à fournir un système optique oculaire dépendant de l'accommodation pour chacun des yeux droit et gauche comme modèle du système optique oculaire ;

(ii) des moyens destinés à calculer, par rapport à chaque point objet correspondant à un pixel de l'image d'origine ou de l'image d'origine ayant subi une distorsion, des distances allant du point objet vers le centre droit et gauche de rotation monoculaire en utilisant la distance objet obtenue dans l'étape de création d'une image d'origine ;

(iii) des moyens destinés à établir, par rapport à chaque point objet correspondant à un pixel de l'image d'origine ou de l'image d'origine ayant subi une distorsion, des pouvoirs d'accommodation des yeux droit et gauche à une même valeur ou à des valeurs différentes selon chaque distance allant du point objet à chaque centre de rotation monoculaire, et chaque pouvoir dioptrique de verre de lunette à chaque position principale de passage de rayon obtenue dans l'étape de création d'une image d'origine ayant subi une distorsion, et

(iv) des moyens destinés à dériver, par rapport à chaque point objet correspondant à un pixel de l'image d'origine ou de l'image d'origine ayant subi une distorsion, l'indice de performance binoculaire des verres de lunettes dans un système optique uni comprenant le verre de lunettes et le système optique oculaire dépendant de l'accommodation qui est mis en rotation selon une direction de rotation monoculaire ; et

(e) des moyens destinés à créer l'image d'indice de performance binoculaire, comprenant en outre :

(i) des moyens destinés à créer une image d'indice de performance binoculaire en attribuant, à chaque pixel de l'image d'origine ou de l'image d'origine ayant subi une distorsion, une luminance ou des luminances monoculaire(s) des trois couleurs primaires de RVB déterminées selon la valeur de l'indice de performance binoculaire des verres de lunettes, et

(ii) des moyens destinés à recouvrir l'image d'indice de performance binoculaire obtenue des images de marque de monture des montures de lunettes créées dans l'étape de dérivation des positions des cadres de lunettes.

**18.** Appareil destiné à indiquer la performance binoculaire de verres de lunettes selon la revendication 17, comprenant :

des moyens destinés à créer des objets virtuels en utilisant l'infographie et en les plaçant dans un espace tridimensionnel virtuel ;

des moyens destinés à créer une histoire des changements avec le temps des positions des yeux, de la direction d'une ligne visuelle centrale, des positions de passage de rayon dans les verres droit et gauche et de la quantité de déformation de déplacement des objets virtuels ;

des moyens destinés à créer une image d'indice de performance binoculaire de verres de lunettes à chaque instant par les moyens selon la revendication 16 ; et

des moyens destinés à éditer des images de performance binoculaire à tout instant dans une animation vidéo.

# Flow for creating binocular performance index image

Processes within ⌐ ̅ ̅ ̅ ̅ ̅ ⌐ is down for each image pixel

Fig.1

EP 1 291 633 B1

Fig.2

Fig.3

Fig.4

EP 1 291 633 B1

Plane containing $\bar{r}_L$ and $O_L O_R$

Plane containing $\bar{r}$ and $O_L O_R$

Plane containing $\bar{r}_R$ and $O_L O_R$

Angle of convergence

Angle of deviation

$P_L$

$P'$

$P_R$

$Q'$

$\bar{r}$

$Q_L$

$Q_R$

$O_L$

$O$

$O_R$

$\bar{r}_L$

$\bar{r}_R$

$O$

A

C

$\bar{r}_R$

B

D

$\bar{r}$

Angle of convergence = angle AOB

Angle of vertical deviation = angle COD

Fig.5

Fig.6

**Optical Parameters of Navarro's Eye Model (Accommodation Free)**

| Radius of Curvature (mm) | |
|---|---|
| Anterior surface of cornea | 7.72 |
| Posterior surface of cornea | 6.2 |
| Anterior surface of crystalline lens | 10.2 |
| Posterior surface of crystalline lens | -6.0 |
| **Asphericity Q** | |
| Anterior surface of cornea | -0.26 |
| Anterior surface of crystalline lens | -3.1316 |
| Posterior surface of crystalline lens | -1.0 |
| **Thickness (mm)** | |
| Cornea | 0.55 |
| Aqueous | 3.05 |
| Crystalline lens | 4.0 |
| Vitreous | 16.4 |
| **Refractive Index** | |
| Cornea | 1.367 |
| Aqueous | 1.3374 |
| Crystalline lens | 1.42 |
| Vitreous | 1.336 |
| **Resulting refractive power (diopters)** | |
| | 60.4 |

Fig.7

# Dependence of Lens Parameters on Accommodation A (in diopters)

| Lens Parameter | Accommodation depence |
|---|---|
| Anterior Crystalline Lens Radius | $R_3(A) = 10.2000 - 1.7500\ln(A+1)$ |
| Anterior Crystalline Lens Asphericity | $Q_3(A) = -3.1316 + 0.3400\ln(A+1)$ |
| Posterior Crystalline Lens Radius | $R_4(A) = -6.0000 + 0.2294\ln(A+1)$ |
| Posterior Crystalline Lens Asphericity | $Q_4(A) = -1.0000 - 0.1230\ln(A+1)$ |
| Aqueous Thickness | $D_2(A) = 3.0500 - 0.0500\ln(A+1)$ |
| Crystalline Lens Thickness | $D_3(A) = 4.0000 + 0.1000\ln(A+1)$ |
| Crystalline Lens Refractive Index | $n_3(A) = 1.4200 + 9.00 \times 10^{-5}\left(10.00A + A^2\right)$ |

# Fig.8

Entrance Pupil

Object Plane

Optical System

Image Plane

Spot Diagram

PSF

Fig.9

EP 1 291 633 B1

Fig.10

EP 1 291 633 B1

Fig.11

Fig. 12

Original image of the visual field

Fig.13

EP 1 291 633 B1

positions on the convex surface of lenses
where the visual lines pass

Fig.14

-3.0D -2.0D -1.0D 0.0D 1.0D 2.0D 3.0D

residual power of the average
of the right and the left residual wavefront

Fig.15

-3.0D  -2.0D  -1.0D  0.0D  1.0D  2.0D  3.0D

Convergence-accommodation difference

Fig.16

EP 1 291 633 B1

EP 1 291 633 B1

-1.0　　　　　　0.0　　　　　1.0PrD

Binocular vertical deviation

Fig.17

Binocular point deformation index

Fig.18

Binocular clearness index

Fig. 19

EP 1 291 633 B1

Flow for creating video of binocular performance index image

Spectacle Lens Parameters

Virtual CG Objects

Create binocular performance index Image

binocular performance index image

Position of midpoint of binocular rotation and Direction of Central Visual Line

Central Principal Ray-passing Positions On both Spectacle Lenses

Create Video Story

Edit Video Image

Narration and etc.

Video of binocular performance index image

Processes within ⌐ ¬ is down for each point of time

Fig.20

49

Fig.21